# EUROPEAN PATENT APPLICATION

(11) **EP 4 763 677 A1**
(43) Date of publication of application: **24.06.2026**
(21) Application number: 25223602.1
(22) Date of filing: 15.12.2025
(51) Int. Cl.: B62D 33/06, G01S 19/14, H01Q 1/32

(54) **WORKING MACHINE**

(30) Priority: 19.12.2024 JP 2024224353
(71) Applicant: KUBOTA CORPORATION, Osaka-shi, Osaka 556-8601 (JP)
(72) Inventor: FUJIMOTO, Kazutaka, Sakai-shi (JP); TAKEOKA, Susumu, Sakai-shi (JP)
(74) Representative: Steffens, Adrian

(57) **Abstract**

A working machine (1) includes a machine body (2), a traveling device (3) to support the machine body (2) such that the machine body (2) is allowed to travel, an operator's seat (4), a protector (8) provided on the machine body (2) to protect the operator's seat (4), and a position detector (40) to acquire position information from one or more positioning satellites. The protector (8) includes a roof (17) provided above the operator's seat (4). The position detector (40) is housed in the roof (17). (Fig. 2)

## Description

### Background

### Field of the Invention

The present invention relates to working machines having a positioning function.

### Description of the Related Art

In recent years, to improve work efficiency, development of working machines having a function of autonomously traveling along a target travel route has been underway. The target travel route is set based on measured position information provided by a global navigation satellite system (GNSS). Such a working machine is required to reliably receive, with a position detector, satellite signals transmitted from positioning satellites. Accordingly, in a working machine of the related art, the position detector (position detection device) is located on an upper portion of a cabin roof where there are fewer communication obstacles in the vicinity (see, for example, Japanese Unexamined Patent Application Publication No. 2020-142651).

### Summary

In a working machine including a position detector, as in the above-described working machine of the related art, it is desirable to provide a structure that can reduce the likelihood of contact between the position detector and obstacles, such as tree branches and flying stones, during operation to maintain a reliable positioning function over a long period of time.

The present invention has been made in light of the above-described circumstances, and an object of one or more example embodiments of the present invention is to provide working machines capable of maintaining a reliable positioning function over a long period of time.

To achieve the above-described object, example embodiments of the present invention include the following technical features.

A working machine according to an example embodiment of the present invention includes a machine body, a traveling device to support the machine body such that the machine body is allowed to travel, an operator's seat, a protector provided on the machine body to protect the operator's seat, and a position detector to acquire position information from one or more positioning satellites, wherein the protector includes a roof provided above the operator's seat, and the position detector is housed in the roof.

The present invention provides a working machine capable of maintaining a reliable positioning function over a long period of time by eliminating or reducing the possibility of contact between the position detector and obstacles.

The above and other elements, features, steps, characteristics and advantages of the present invention will become more apparent from the following detailed description of the example embodiments with reference to the attached drawings.

### Brief description of drawings

A more complete appreciation of example embodiments of the present invention and many of the attendant advantages thereof will be readily obtained as the same becomes better understood by reference to the following detailed description when considered in connection with the accompanying drawings described below.
- FIG. 1: is a schematic diagram of a positioning assistance system.
- FIG. 2: is a side view of a working machine according to an example embodiment of the present invention.
- FIG. 3: is a top view of the working machine according to the example embodiment of the present invention.
- FIG. 4: is a perspective view of the working machine according to the example embodiment of the present invention.
- FIG. 5: is a perspective view of a frame structure of a cabin.
- FIG. 6: is a partially exploded perspective view of a structure including a roof.
- FIG. 7: is a partially exploded side view of the structure including the roof.
- FIG. 8: is a partially exploded perspective view of a structure including a rear portion of the lower surface of the roof.
- FIG. 9: is a schematic side view of a structure including a position detector.
- FIG. 10: is a schematic diagram illustrating an arrangement of communication cables.
- FIG. 11: is a side view of a working machine of a first variation.
- FIG. 12: is a top view of the working machine of the first variation.
- FIG. 13: is a partially exploded perspective view of a structure including a front portion of a lower surface of a roof according to the first variation.
- FIG. 14: is a partially exploded perspective view of a structure including a front portion of a lower surface of a roof according to a second variation.
- FIG. 15: is a top view of a working machine of a third variation.
- FIG. 16: is a side view of a roof according to the third variation.
- FIG. 17: is a partially exploded perspective view of a structure including a rear portion of a lower surface of a roof according to a fourth variation.
- FIG. 18: is a partially exploded side view of a roof according to a fifth variation.
- FIG. 19: is a partially exploded side view of a roof according to a sixth variation.
- FIG. 20: is a side view of a roof according to a seventh variation.
- FIG. 21: is a side view of a roof according to an eighth variation.
- FIG. 22: is a side view of a roof according to a ninth variation.
- FIG. 23: is a perspective view of the structure including an upper frame according to the ninth variation.

### Description of the example embodiments

Example embodiments will now be described with reference to the accompanying drawings, wherein like reference numerals designate corresponding or identical elements throughout the various drawings. The drawings are to be viewed in an orientation in which the reference numerals are viewed correctly.

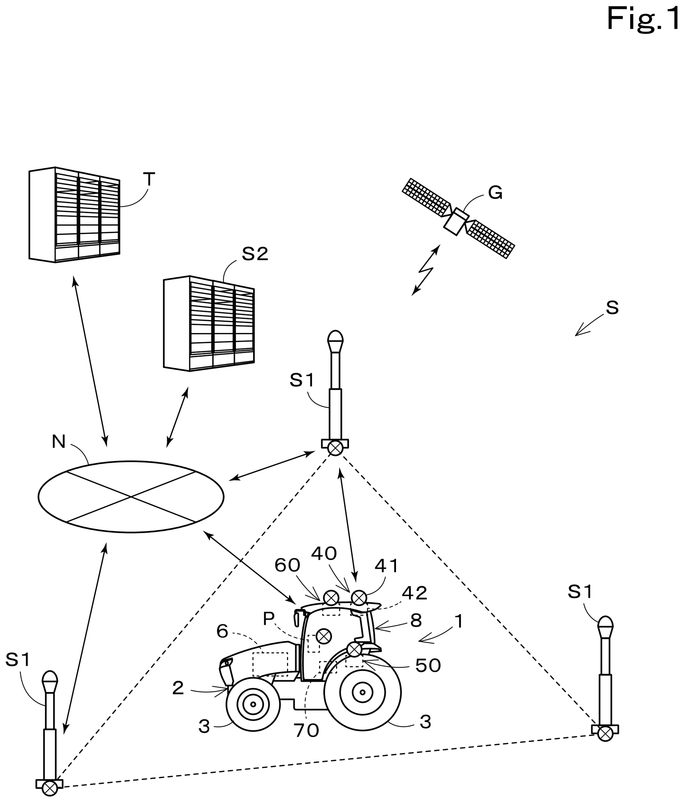

Example embodiments of the present invention will now be described with reference to the drawings. A working machine 1 according to the present example embodiment has an autonomous traveling function. As illustrated in FIG. 1, the working machine 1 includes a position detector 40, a correction information communicator 50, a work information communicator 60, and a controller 70. The working machine 1 is capable of setting a target travel route based on, for example, information related to a target agricultural field, and of autonomously traveling along the target travel route by using position information of the working machine 1 (measured position information) acquired from the positioning assistance system S. The working machine 1 of the present example embodiment has a trajectory communication function for transmitting the position information of the working machine 1 (measured position information) acquired by the position detector 40, operation information, and the like to an agricultural-field management device T.

The positioning assistance system S includes a plurality of positioning base stations S1 and an assistance device S2. The positioning base stations S1 are located at predetermined reference points, such as building roofs and locations around an agricultural field. The positioning base stations S1 transmit satellite signals received from a positioning satellite G to the assistance device S2 via the external communication network N. The assistance device S2 is a fixed computer terminal (server) installed in an agricultural machinery manufacturer, an agricultural cooperative, a positioning assistance system management company, or the like. The assistance device S2 transmits observation information based on the satellite signals received from the positioning base stations S1 and position correction information to the outside via the external communication network N.

The agricultural-field management device T is a fixed computer terminal (server) installed in an agricultural machinery manufacturer, an agricultural cooperative, an agricultural-field management service provider, or the like. The agricultural-field management device T records a work trajectory of the working machine 1 on an agricultural field map based on the position information of the working machine 1 received via the external communication network N, the operation information, and the like. A worker or an agricultural field manager can access the agricultural-field management device T by using a personal computer, a portable information terminal, an on-vehicle information terminal (operation terminal) mounted in the working machine 1, or the like. This enables analysis of work progress and yield, management of fertilizer application amounts, and the like.

The position detector 40 acquires position information (measured position information including a latitude and longitude) from a satellite positioning system, such as the Global Positioning System (GPS), the Global Navigation Satellite System (GLONASS), Michibiki (Quasi-Zenith Satellite System (QZSS)), Galileo, or BeiDou. The position detector 40 receives satellite signals transmitted from the positioning satellite G (measured position information including the location of the positioning satellite G and a transmission time), and detects the position (for example, the latitude and longitude) of the working machine 1 based on the satellite signals.

The position detector 40 includes a satellite communication unit 41 and a measurement unit 42. The satellite communication unit 41 receives the satellite signals transmitted from the positioning satellite G. The measurement unit 42 measures a machine body position based on the satellite signals received by the satellite communication unit 41.

The position detector 40 of the present example embodiment is a satellite communicator with a built-in antenna in which the satellite communication unit 41 and the measurement unit 42 are accommodated in the same casing. The casing of the position detector 40 may be omitted. The structure of the position detector 40 will be described in detail below.

The correction information communicator 50 is a communicator for measured position correction that is wirelessly connected to the external communication network N and that acquires correction information for the machine body position (position correction information) from the assistance device S2.

The correction information communicator 50 of the present example embodiment is wirelessly connected to a wireless communication terminal P, such as a mobile information terminal carried by an operator or an on-vehicle information terminal (operation terminal) mounted in the working machine 1, via near-field wireless communication, such as Wi-Fi (registered trademark) or Bluetooth (registered trademark). The correction information communicator 50 uses a communication function of the wireless communication terminal P to connect to the external communication network N. In other words, the correction information communicator 50 of the present example embodiment includes a near-field wireless communication unit (wireless router) that is wirelessly connected to the wireless communication terminal P, and that is wirelessly connectable to the external communication network N via the wireless communication terminal P.

The correction information communicator 50 is not limited to a near-field wireless communication unit wirelessly connectable to the external communication network N via the wireless communication terminal P, and may be a direct communication unit wirelessly connectable to the external communication network N directly via a communication base station of a telecommunications network of a telecommunications provider, a data communications network of an internet service provider, or the like. In this case, the correction information communicator 50 is wirelessly connected to the external communication network N directly via the communication base station of the telecommunications network, the data communications network, or the like and acquires the position correction information from the assistance device S2.

The work information communicator 60 is a communicator for agricultural field management that is wirelessly connected to the external communication network N, and that transmits the measured position information (machine body position), the operation information of the working machine 1, the operation information of the working device U1 connected to the working machine 1, and the like to the agricultural-field management device T.

The work information communicator 60 of the present example embodiment is wirelessly connected to the external communication network N via a communication base station of a telecommunications network of a telecommunications provider, a data communications network of an internet service provider, or the like. In other words, the work information communicator 60 is a direct communication unit that is directly wirelessly connectable to the external communication network N. Accordingly, even when the wireless communication terminal (portable information terminal) P is not carried by the operator or mounted in the working machine 1, the working machine 1 can continuously transmit the measured position information and the operation information to the agricultural-field management device T.

The work information communicator 60 is not limited to a direct communication unit that is directly wirelessly connectable to the external communication network N. Similarly to the correction information communicator 50, the work information communicator 60 may be a near-field wireless communication unit that uses the communication function of the wireless communication terminal P to wirelessly connect to the external communication network N. In this case, the work information communicator 60 is wirelessly connected to the external communication network N via the wireless communication terminal P, such as the portable information terminal carried by the operator or the on-vehicle information terminal mounted in the working machine 1, and transmits the measured position information and operation information to the agricultural-field management device T.

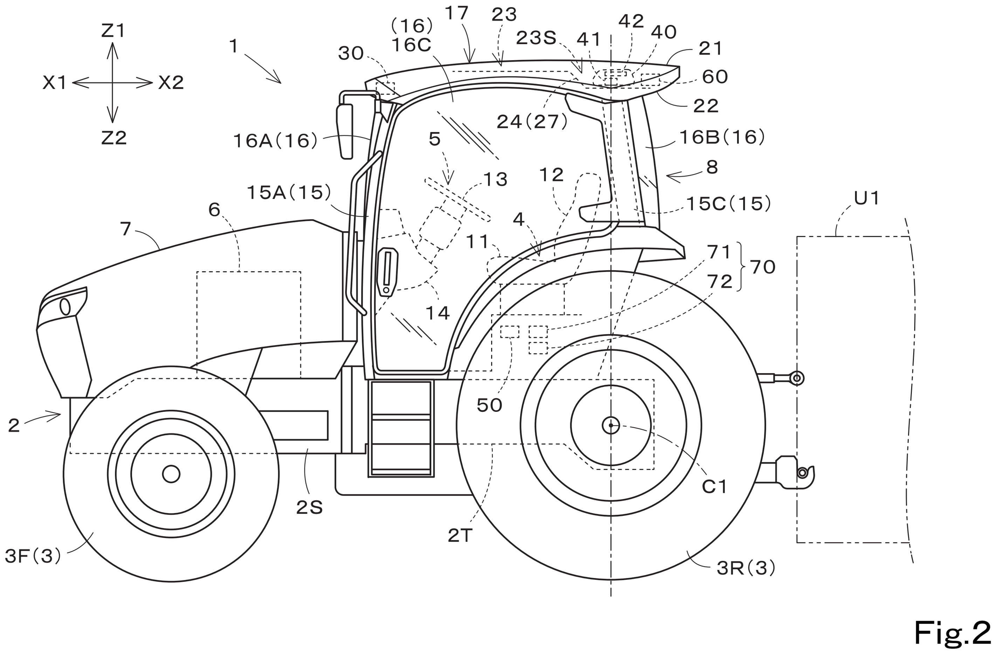

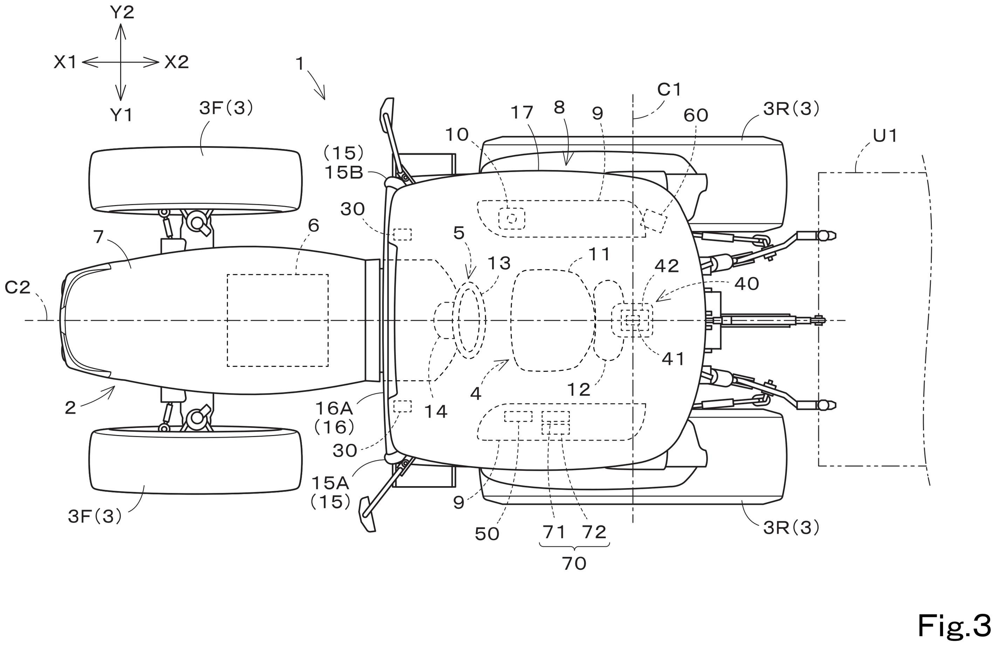

As illustrated in FIGS. 2 and 3, the working machine 1 includes at least one object sensor 30. The operation of the working machine 1 is controlled based on detection information obtained by the object sensor 30. The object sensor 30 of the present example embodiment is an imager that captures images of the surroundings of the working machine 1 and transmits the captured images to the controller 70. Based on the images, the controller 70 determines whether an object that obstructs the movement of the working machine 1 is present in the vicinity of the working machine 1.

In the working machine 1 of the present example embodiment, the object sensor 30 is an imager, such as a charge coupled device (CCD) camera, a complementary metal-oxide-semiconductor (CMOS) camera, or an infrared camera. The object sensor 30 is not limited to an imager as long as the object sensor 30 enables accurate determination of whether an object is present in the vicinity of the working machine 1.

For example, the object sensor 30 may be a laser sensor (light detection and ranging (LiDAR) sensor) that emits laser light around the working machine 1 and measures the distance and position of an object based on detection information of the reflected light. Alternatively, the object sensor 30 may be a millimeter-wave radar that emits radio waves around the working machine 1 and measures the distance and position of an object based on detection information of the reflected waves. The working machine 1 may include, as the object sensor 30, two or more types of sensors selected from an imager, a laser sensor, and a millimeter-wave radar. These types of sensors may be used together to detect an object in the vicinity of the working machine 1.

The controller 70 is an electronic control unit (ECU) that controls the operations of traveling devices 3, a prime mover 6, and other elements. The controller 70 includes a monitor (monitor ECU) 71 and an image processor (image ECU) 72.

The monitor 71 corrects errors in the measured position information acquired by the position detector 40 based on the position correction information acquired by the correction information communicator 50, and sets a target travel route along which the working machine 1 is to travel autonomously. The monitor 71 automatically controls the steering direction of the traveling devices 3, the rotation speed of the prime mover 6, and the like in accordance with the target travel route. Thus, the monitor 71 controls the working machine 1 that travels autonomously.

The image processor 72 analyzes the detection information (image information) obtained by the object sensor 30 to determine whether an obstacle is present in the vicinity of the working machine 1. The monitor 71 limits the operation of the working machine 1 in accordance with the analysis result obtained by the image processor 72. Specifically, for example, assume that the object sensor 30 has detected a person or an object (obstacle) that obstructs the movement of the working machine 1 on the target travel route while the working machine 1 is traveling automatically. In this case, if the distance from the obstacle to the working machine 1 is equal to or less than a predetermined value, the monitor 71 reduces the output of the prime mover 6 and activates the brake to stop the working machine 1.

When the object sensor 30 is a laser sensor or a millimeter-wave radar, the controller 70 includes, instead of the image processor 72, an input analysis device that analyzes the detection information obtained by the laser sensor or the millimeter-wave radar to determine whether an obstacle is present in the vicinity of the working machine 1. The monitor 71 limits the operation of the working machine 1 as described above in accordance with the analysis result obtained by the input analysis device.

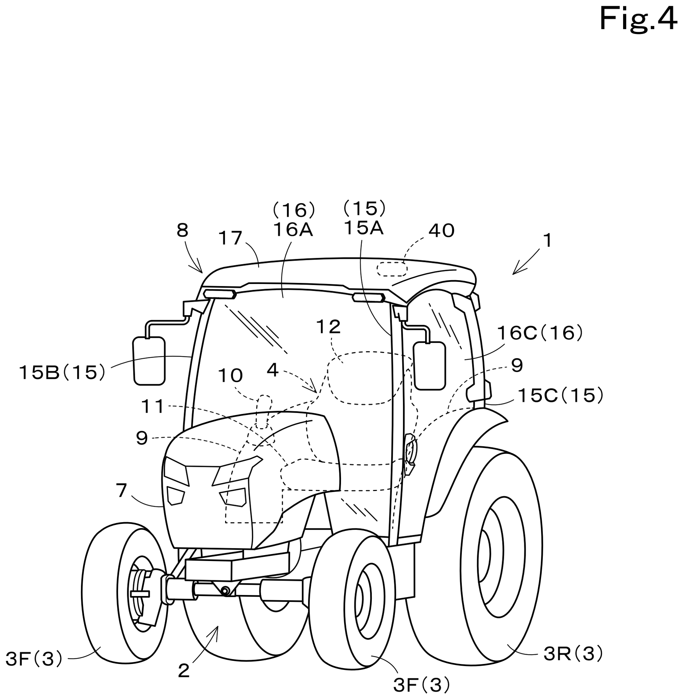

As illustrated in FIGS. 2 and 3, the working machine 1 of the present example embodiment is a tractor that can be used with a working device (implement) U1 connected to a rear portion of the machine body 2 as appropriate. The working device (implement) U1 may be, for example, a cultivator, a seeder, a spreader, or a baler. The working machine 1 includes the machine body 2, the traveling devices 3, an operator's seat 4, a steering device 5, the prime mover 6, a hood 7, and a cabin 8. As illustrated in FIGS. 3 and 4, the working machine 1 also includes at least one console 9 and a manual operator 10.

The working machine 1 according to the present invention is not limited to a tractor. For example, the working machine 1 according to the present invention may be an agricultural machine other than a tractor, a construction machine, a transport machine, or a utility vehicle. Alternatively, the working machine 1 according to the present invention may be, for example, a chemical spreader or a narrow tractor in which the traveling devices 3 have a narrow tread and that is suitable for traveling along a relatively narrow path between trees in an orchard or ridges in a field.

In the following description, a length direction of the machine body 2 (direction shown by arrows X1 and X2 in FIGS. 2 and 3) will be referred to as a front-rear direction, a width direction of the machine body 2 (direction shown by arrows Y1 and Y2 in FIG. 3) as a left-right direction, and a height direction of the machine body 2 (direction shown by arrows Z1 and Z2 in FIG. 2) as an up-down direction.

The machine body 2 includes a metal frame member, a casing of a driving-force transmission (transmission case), and other components that are assembled together. As illustrated in FIG. 2, in the present example embodiment, a front half portion of the machine body 2 includes a machine body frame 2S elongated in the front-rear direction. A rear half portion of the machine body 2 includes a transmission case 2T. The machine body 2 is supported by the traveling devices 3 such that the machine body 2 is allowed to travel.

The traveling devices 3 support the machine body 2 such that the machine body 2 is allowed to travel. The traveling devices 3 of the present example embodiment are wheels rotatable relative to the machine body 2. The traveling devices 3 include left and right front wheels 3F serving as front traveling devices provided at a front portion of the machine body 2 and left and right rear wheels 3R serving as rear traveling devices provided at a rear portion of the machine body 2. The front wheels 3F and/or the rear wheels 3R are steered by the steering device 5. The traveling devices 3 are not limited to wheels. For example, the traveling devices 3 may be crawlers.

The working machine 1 of the present example embodiment is a two-wheel-drive vehicle in which the rear wheels 3R are driven, and is also a two-wheel-steering vehicle in which the front wheels 3F are steered. Alternatively, the working machine 1 may be a four-wheel-drive vehicle in which the front wheels 3F and the rear wheels 3R are all driven and/or a four-wheel-steering vehicle in which the front wheels 3F and the rear wheels 3R are all steered. Among the traveling devices 3 of the working machine 1, the front wheels 3F and/or the rear wheels 3R may be crawlers.

As illustrated in FIG. 2, the operator's seat 4 is provided at an upper rear portion of the machine body 2. As illustrated in FIGS. 2 and 3, the operator's seat 4 includes a seat portion 11 and a backrest portion 12. The seat portion 11 is provided in a substantially central region of an interior of the cabin 8 in the front-rear direction. The backrest portion 12 is provided upright on a rear portion of the seat portion 11.

The steering device 5 is provided at the upper rear portion of the machine body 2. The steering device 5 is located forward of the operator's seat 4 at a distance from the operator's seat 4. The steering device 5 is adjacent to a front panel (front window) 16A in the interior of the cabin 8. The steering device 5 includes a steering wheel 13 and a steering mechanism 14. In the present example embodiment, the steering mechanism 14 includes a mechanism that steers the front wheels (front traveling devices) 3F in response to a rotation of the steering wheel 13.

As illustrated in FIG. 2, the prime mover 6 is mounted on an upper front portion of the machine body frame 2S. The hood 7 is provided at an upper front portion of the machine body 2, and covers a space in which the prime mover 6 is installed. In other words, the prime mover 6 is housed inside the hood 7. The prime mover 6 of the present example embodiment is a diesel engine. Alternatively, the prime mover 6 may be a gasoline engine, or a hydrogen engine driven by energy generated by the combustion of hydrogen gas. Alternatively, the prime mover 6 may be an electric motor driven by electric power generated by a fuel cell or electric power supplied from an external power supply and charged in a battery, or a hybrid prime mover including both an engine and an electric motor.

The cabin 8 is a protector that protects the operator's seat 4. The cabin 8 is provided at the upper rear portion of the machine body 2 and surrounds the operator's seat 4. The operator's seat 4 is provided in the interior of the cabin 8. As illustrated in FIGS. 2 to 4, the cabin 8 is a box-shaped structure that covers the front, rear, left, right, and top of the operator's seat 4, and includes at least one pillar 15, at least one panel 16, and a roof 17. The structure of the cabin 8 will be described in detail below.

As illustrated in FIGS. 3 and 4, the console 9 is provided in the interior of the cabin 8. In the present example embodiment, the console 9 is provided at each of the left and right sides of the operator's seat 4 in the interior of the cabin 8. Alternatively, one console 9 may be provided only at the left or right side of the operator's seat 4.

The manual operator 10 includes, for example, an operation lever for operating the working device U1, operation buttons and operation dials for controlling various operations of the working machine 1 (for example, turning on/off work lights), and the like. In the present example embodiment, the manual operator 10 is provided on the console 9 at the right side of the operator's seat 4.

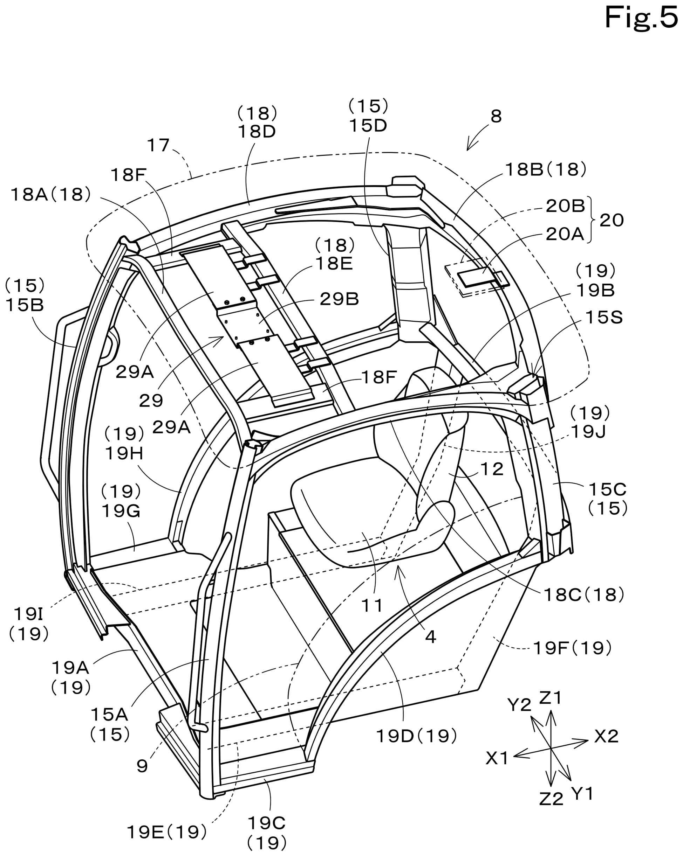

As illustrated in FIG. 5, the cabin 8 includes an upper frame 18 and a lower frame 19. A plurality of pillars 15 are provided upright on an upper portion of the lower frame 19 and support the upper frame 18 from below. In other words, the upper frame 18 is supported from below by the plurality of pillars 15 provided upright on the upper portion of the lower frame 19. Thus, the cabin 8 has a box-shaped frame structure including the pillars 15, the upper frame 18, and the lower frame 19.

The pillars 15, which are hollow frame bodies, are provided upright at locations forward and rearward of the operator's seat 4 at a distance from each other in the left-right direction. In other words, the pillars 15 are included in protection frames at the left front, right front, left rear, and right rear corners of the cabin 8. The pillars 15 include a left front pillar 15A, a right front pillar 15B, a left rear pillar 15C, and a right rear pillar 15D.

Although the cabin 8 of the present example embodiment includes the above-described four pillars 15, the number of pillars 15 is not limited to four. For example, the cabin 8 may include five pillars 15 (the above-described four pillars 15 and a left center or right center pillar) or six pillars 15 (the above-described four pillars 15, a left center pillar, and a right center pillar).

The left front pillar 15A is provided upright at a location forward and to the left of the operator's seat 4. The right front pillar 15B is provided upright at a location forward and to the right of the operator's seat 4. The left rear pillar 15C is provided upright at a location rearward and to the left of the operator's seat 4. The right rear pillar 15D is provided upright at a location rearward and to the right of the operator's seat 4. The roof 17 is supported from below by these four pillars 15.

The upper frame 18, which is a hollow frame body, extends between upper portions of the pillars 15 that are adjacent to each other in the left-right or front-rear direction and connects the pillars 15 to each other. The upper frame 18 includes a front upper frame 18A, a rear upper frame 18B, a left side upper frame 18C, a right side upper frame 18D, and a center upper frame 18E.

The front upper frame 18A is included in an upper front portion of the cabin 8. The front upper frame 18A extends in the left-right direction at the upper front portion of the cabin 8 and connects the upper portions of the left front pillar 15A and the right front pillar 15B to each other.

The rear upper frame 18B is included in an upper rear portion of the cabin 8. The rear upper frame 18B extends in the left-right direction at the upper rear portion of the cabin 8 and connects the upper portions of the left rear pillar 15C and the right rear pillar 15D to each other.

The left side upper frame 18C is included in an upper left portion of the cabin 8. The left side upper frame 18C extends in the front-rear direction at the upper left portion of the cabin 8 and connects the upper portions of the left front pillar 15A and the left rear pillar 15C to each other.

The right side upper frame 18D is included in an upper right portion of the cabin 8. The right side upper frame 18D extends in the front-rear direction at the upper right portion of the cabin 8 and connects the upper portions of the right front pillar 15B and the right rear pillar 15D to each other.

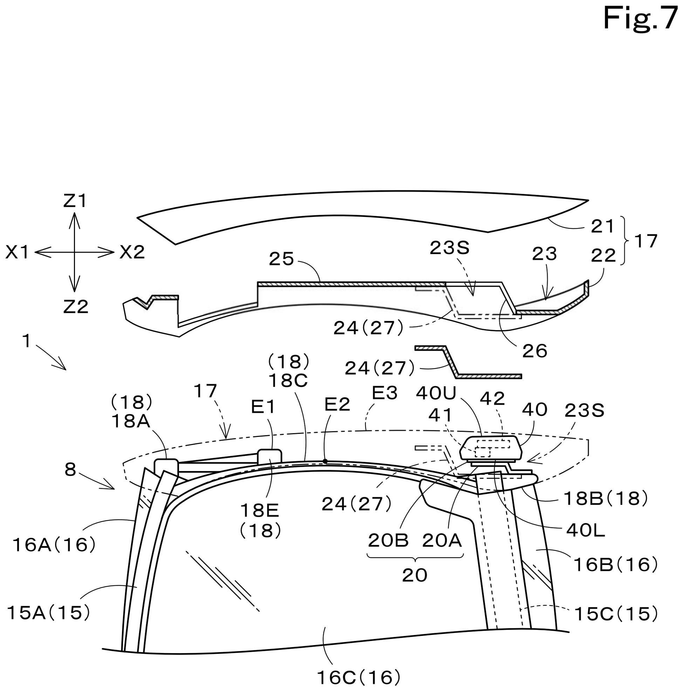

As illustrated in FIGS. 5 and 7, each of the left side upper frame 18C and the right side upper frame 18D (left and right side upper frames 18C and 18D) has an upwardly convex arc shape. In other words, each of the left and right side upper frames 18C and 18D is rounded to be convex upward.

The center upper frame 18E is included in an upper portion of an intermediate portion of the cabin 8 in the front-rear direction. The center upper frame 18E extends in the left-right direction at an intermediate location of the upper portion of the cabin 8 in the front-rear direction, and connects intermediate portions of the left side upper frame 18C and the right side upper frame 18D in the front-rear direction to each other.

The front upper frame 18A, the center upper frame 18E, and the rear upper frame 18B are arranged substantially parallel to each other in that order in the front-to-rear direction at distances from each other. The center upper frame 18E is located between the front upper frame 18A and the rear upper frame 18B and is closer to the front upper frame 18A than to the rear upper frame 18B.

As illustrated in FIG. 7, the center upper frame 18E has an upper surface E1 located higher than curve apices E2 of the left and right upper frames 18C and 18D. In the present example embodiment, the upper surface E1 of the center upper frame 18E serves as an apex of the upper frame 18.

As illustrated in FIGS. 5 to 8, in the present example embodiment, the upper frame 18 includes a device mount frame 20. The device mount frame 20 is attached to the upper frame 18 and supports the position detector 40. The structure of the device mount frame 20 will be described in detail below.

The lower frame 19, which is a frame body that is hollow or L-shaped in cross-section, extends between lower portions of the pillars 15 adjacent to each other in the left-right or front-rear direction and connects the pillars 15 to each other. The lower frame 19 includes a front lower frame 19A, a rear lower frame 19B, a first left lower frame 19C, a second left lower frame 19D, a third left lower frame 19E, a fourth left lower frame 19F, a first right lower frame 19G, a second right lower frame 19H, a third right lower frame 19I, and a fourth right lower frame 19J.

The front lower frame 19A extends in the left-right direction at a lower front portion of the cabin 8 and connects lower portions of the left front pillar 15A and the right front pillar 15B to each other. The rear lower frame 19B extends in the left-right direction at a rear portion of the cabin 8 (at a location rearward of the backrest portion 12 of the operator's seat 4) and connects lower portions of the left rear pillar 15C and the right rear pillar 15D to each other.

The first left lower frame 19C extends rearward from the lower portion of the left front pillar 15A and is connected to a lower portion of the second left lower frame 19D. The second left lower frame 19D extends rearward and upward along an arc from a rear portion of the first left lower frame 19C and is connected to the lower portion of the left rear pillar 15C. Thus, the first left lower frame 19C and the second left lower frame 19D connect the left front pillar 15A and the left rear pillar 15C to each other.

The third left lower frame 19E extends rearward from a left portion of the front lower frame 19A and is connected to a lower portion of the fourth left lower frame 19F. The fourth left lower frame 19F extends upward from a rear portion of the third left lower frame 19E and is connected to a left portion of the rear lower frame 19B. Thus, the third left lower frame 19E and the fourth left lower frame 19F connect the front lower frame 19A and the rear lower frame 19B to each other.

The first right lower frame 19G extends rearward from the lower portion of the right front pillar 15B and is connected to a lower portion of the second right lower frame 19H. The second right lower frame 19H extends rearward and upward along an arc from a rear portion of the first right lower frame 19G and is connected to the lower portion of the right rear pillar 15D. Thus, the first right lower frame 19G and the second right lower frame 19H connect the right front pillar 15B and the right rear pillar 15D to each other.

The third right lower frame 19I extends rearward from a right portion of the front lower frame 19A and is connected to a lower portion of the fourth right lower frame 19J. The fourth right lower frame 19J extends upward from a rear portion of the third right lower frame 19I and is connected to a right portion of the rear lower frame 19B. Thus, the third right lower frame 19I and the fourth right lower frame 19J connect the front lower frame 19A and the rear lower frame 19B to each other.

As illustrated in FIGS. 2 to 4, the panel 16 includes the front panel 16A, a rear panel 16B, and left and right side panels 16C. The front panel 16A is provided between two pillars 15 arranged in the left-right direction at a location forward of the operator's seat 4, and defines the front window of the cabin 8. The rear panel 16B is provided between two pillars 15 arranged in the left-right direction at a location rearward of the operator's seat 4, and defines a rear window of the cabin 8. Each of the side panels 16C is located between two pillars 15 arranged in the front-rear direction at a location to the left or right of the operator's seat 4, and defines a left or right side window of the cabin 8.

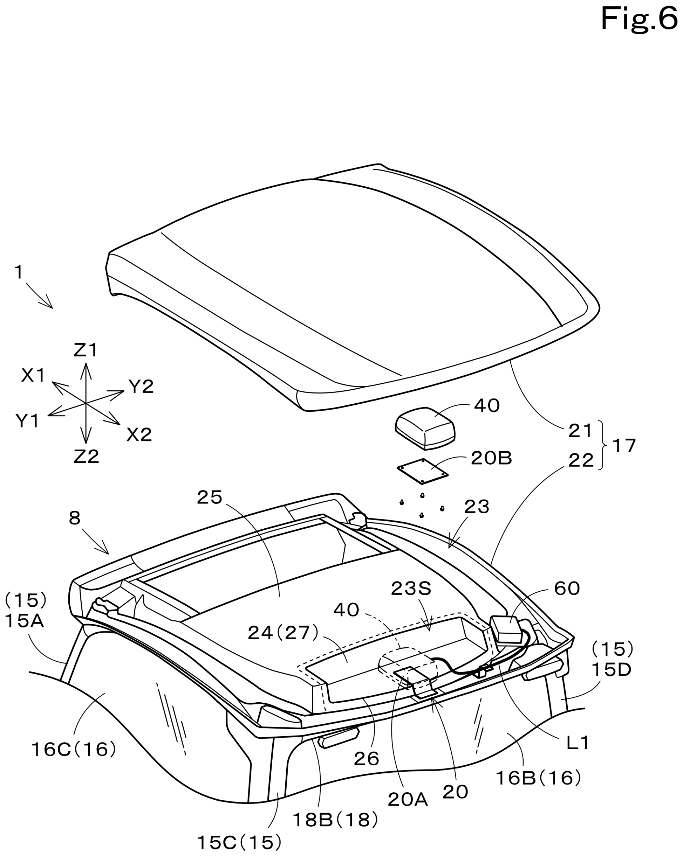

As illustrated in FIGS. 6 to 8, the roof 17 includes an outer roof 21 and an inner roof 22. The outer roof 21 defines an upper surface of the roof 17. The inner roof 22 defines a lower surface of the roof 17. The outer roof 21 and the inner roof 22 are included in upper and lower outer shells of the roof 17.

The outer roof 21 and the inner roof 22 are connected together such that the outer roof 21 and the inner roof 22 overlap in the up-down direction. The outer roof 21 and the inner roof 22 define a predetermined space 23 therebetween in the up-down direction. The position detector 40 is housed in the space 23 (interior space of the roof 17). The interior space 23 of the roof 17 houses, in addition to the position detector 40, a work information communicator 60, an air conditioning controller, an audio controller, and other devices.

The outer roof 21 is made of a synthetic resin material with high radio-wave transmittance, such as polycarbonate. Accordingly, the position detector 40 is capable of continuously and reliably receiving the satellite signals transmitted from the positioning satellite G through the outer roof 21. The outer roof 21 may be structured such that only a portion of a structural wall is made of a material with high radio-wave transmittance.

The outer roof 21 is removably connected to the inner roof 22 with a screw or the like. Accordingly, when the position detector 40 and/or another device housed in an interior of the roof 17 is subjected to maintenance, such as inspection or repair, the worker can access the interior space 23 of the roof 17 from a space outside the cabin 8 by removing the outer roof 21 from the inner roof 22.

The inner roof 22 is fixed to an upper portion of the upper frame 18. As illustrated in FIG. 7, the inner roof 22 has a lower surface that is an upwardly curved surface. The side upper frames 18C and 18D are positioned along the lower surface of the inner roof 22. In other words, the lower surface of the roof 17 is an upwardly curved surface that matches the rounded shape of the side upper frames 18C and 18D.

As illustrated in FIGS. 6 to 8, the inner roof 22 includes a bulge 24. The bulge 24 is provided at the lower surface of the inner roof 22. The bulge 24 protrudes downward from the inner roof 22 and defines a device storage space 23S capable of housing the position detector 40 and other devices at a lower portion of the interior of the roof 17. The position detector 40 is located in the device storage space 23S inside the bulge 24.

The bulge 24 is provided at a rear portion of the lower surface of the inner roof 22. More specifically, as illustrated in FIG. 7, the bulge 24 is provided on the lower surface of the inner roof 22 at a location rearward of the seat portion 11 of the operator's seat 4. As illustrated in FIGS. 6 to 8, the bulge 24 has a substantially trapezoidal shape elongated in the left-right direction, and is provided along the front edge of the rear upper frame 18B on the lower surface of the inner roof 22.

The lower surface of the bulge 24 is at substantially the same height as the upper surface of the rear upper frame 18B in the up-down direction. Accordingly, the bulge 24 is less likely to interfere with the operator moving into or out of the cabin 8. The bulge 24 also does not block the view of the operator in the operator's seat 4.

The inner roof 22 includes an access hole 26. The access hole 26 extends through an inner roof body 25 and provides communication between the inside and outside of the roof 17. The access hole 26 is large enough to allow the position detector 40 to be taken out from the interior of the roof 17.

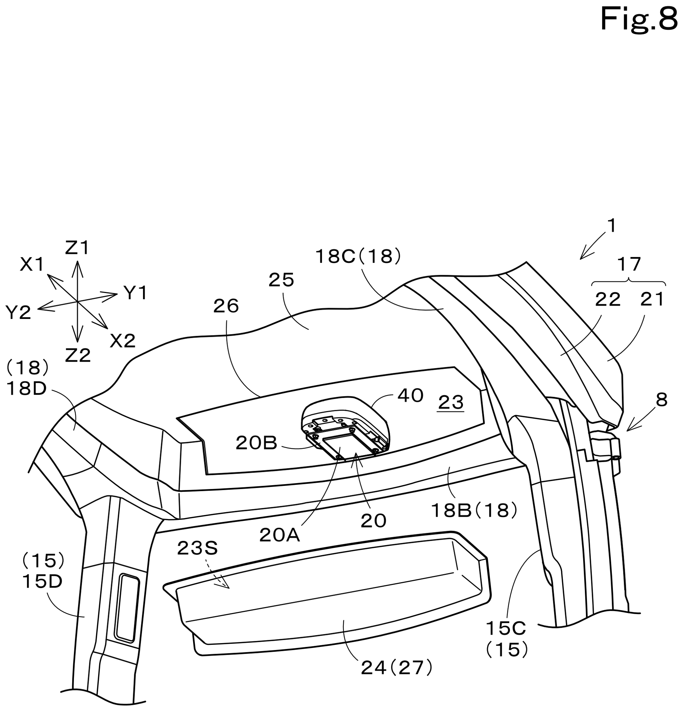

As illustrated in FIGS. 7 and 8, the bulge 24 is removably connected to a lower surface of the inner roof body 25. Substantially the entire bulge 24 is removable from the inner roof body 25. The bulge 24 is connected to the inner roof body 25 with a fastener, such as a screw, and covers the access hole 26 from below the inner roof body 25 (interior of the cabin 8).

As described above, the inner roof 22 of the present example embodiment includes the access hole 26 and the bulge 24 serving as an access hole cover 27 that covers the access hole 26. Accordingly, when the position detector 40 and/or another device housed in the interior of the roof 17 is subjected to maintenance, the worker can access the device storage space 23S from the interior of the cabin 8 through the access hole 26 by removing the bulge 24 (access hole cover 27) from the inner roof 22.

As illustrated in FIGS. 6 to 9, the device mount frame 20 is provided on an upper portion of the rear upper frame 18B. The device mount frame 20 is provided at the center of the rear upper frame 18B in the left-right direction. The position detector 40 is attached to the upper portion of the rear upper frame 18B with the device mount frame 20 provided therebetween. Alternatively, the position detector 40 may be directly attached to the rear upper frame 18B.

As illustrated in FIG. 7, the device mount frame 20 extends forward relative to the rear upper frame 18B from the upper surface of the rear upper frame 18B. The position detector 40 is attached to a front end portion of the device mount frame 20.

The device mount frame 20 is attached to the rear upper frame 18B such that a lower surface 40L of the position detector 40 is located lower than the upper surface E1 of the center upper frame 18E. In other words, the device mount frame 20 is located lower than the apex E1 of the upper frame 18 (center upper frame 18E).

As illustrated in FIGS. 5 to 7, the device mount frame 20 includes a support frame (first frame portion) 20A and an attachment plate (second frame portion) 20B. The support frame 20A is a plate piece bent into a substantially L-shaped form, and includes a rear end portion fixed to the upper surface of the rear upper frame 18B and a front end portion extending forward from the rear upper frame 18B. In other words, the support frame 20A is connected to and supported by the upper surface of the rear upper frame 18B in a cantilever manner.

The support frame 20A of the present example embodiment is inserted through the access hole 26 in the rear portion of the inner roof 22 and attached to the upper portion of the rear upper frame 18B. The support frame 20A is positioned in face of the access hole 26 in the interior of the roof 17.

The attachment plate 20B is a flat, rectangular plate body, and is supported by the support frame 20A from below. The attachment plate 20B of the present example embodiment is fixed to an upper portion of a front end portion of the support frame 20A. The attachment plate 20B may be removably connected to the support frame 20A. For example, the attachment plate 20B may be connected to the support frame 20A with a fastener, such as a screw, or be attachable to and removable from the front end portion of the support frame 20A by sliding the attachment plate 20B in the direction in which the front end portion extends (front-rear direction).

As illustrated in FIG. 6, the position detector 40 is removably connected to the attachment plate 20B. The position detector 40 of the present example embodiment is connected to the upper surface of the attachment plate 20B with a fastener, such as a screw. Accordingly, the position detector 40 can be taken out from the interior of the roof 17 through the access hole 26 by removing the position detector 40 from the attachment plate 20B.

The position detector 40 is located in the device storage space 23S defined in the bulge 24. As illustrated in FIG. 7, the position detector 40 is attached to the device mount frame 20 such that the upper surface 40U of the position detector 40 is located higher than the upper surface (apex) E1 of the center upper frame 18E. The position detector 40 is attached to the device mount frame 20 such that the upper surface 40U of the position detector is located lower than a roof upper surface E3 of the roof 17. In other words, in the present example embodiment, the position detector 40 is positioned such that the upper surface 40U of the position detector 40 is located higher than the upper surface E1 of the center upper frame 18E and lower than the roof upper surface E3.

In the present example embodiment, the position detector 40 is attached to the device mount frame 20 such that the lower surface 40L of the position detector 40 is at substantially the same height (position in the up-down direction) as the curve apices E2 of the side upper frames 18C and 18D.

As illustrated in FIGS. 2 and 3, the position detector 40 is located rearward of the seat portion 11 of the operator's seat 4. The position detector 40 is located on a rear shaft axis C1 when viewed in the up-down direction of the machine body 2. The rear shaft axis C1 extends in the left-right direction along an axis of a drive shaft of the rear wheels (rear traveling devices) 3R. The position detector 40 is located on a machine body axis C2 when viewed in the up-down direction of the machine body 2. The machine body axis C2 extends in the front-rear direction through the center of the machine body 2 in the left-right direction.

More specifically, as illustrated in FIG. 3, the satellite communication unit 41 of the position detector 40 is located at the intersection of the rear shaft axis C1 and the machine body axis C2 when viewed in the up-down direction of the machine body 2. Accordingly, the measurement unit 42 measures the machine body position assuming that the position of the satellite communication unit 41 is a reference center point of the machine body 2.

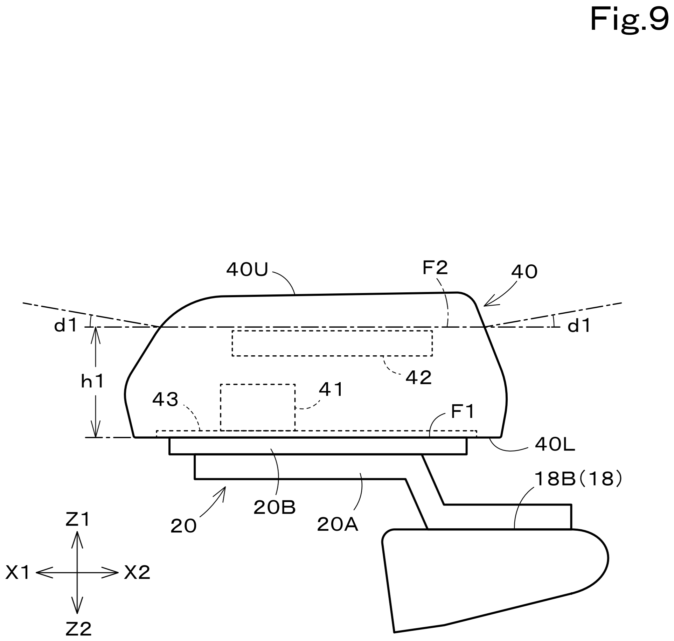

The satellite communication unit 41 is located such that no objects that block radio waves are present around the satellite communication unit 41. More specifically, as illustrated in FIG. 9, the satellite communication unit 41 is located such that no objects that block radio waves are in a region higher than an imaginary reference position F2 by a predetermined angle d1 (for example, 10 degrees). The imaginary reference position F2 is located higher than an attachment surface F1 of the satellite communication unit 41 (for example, a lower surface of a casing of the position detector 40) by a predetermined height h1 (for example, 62 mm).

The position detector 40 includes a shield plate 43. The satellite communication unit 41 is provided on an upper portion of the shield plate 43. The shield plate 43 is provided between the satellite communication unit 41 and the attachment surface F1 of the satellite communication unit 41 (for example, the inner bottom surface of the casing of the position detector 40). The shield plate 43, which is a metal plate member, eliminates or reduces reflective radio waves that reach the satellite communication unit 41 from below the satellite communication unit 41. Thus, communication noise in the satellite communication unit 41 due to multipath propagation or the like can be reduced.

As illustrated in FIG. 3, the correction information communicator 50 is housed in one of the consoles 9. In the present example embodiment, the correction information communicator 50 is provided in the console 9 to the left of the operator's seat 4. Similarly to the outer roof 21, an outer cover of the console 9 is made of a material with high radio-wave transmittance. Accordingly, the correction information communicator 50 is capable of performing continuous and reliable wireless communication with the external communication network N.

As long as the correction information communicator 50 is reliably connectable to the wireless communication terminal P of the operator or the working machine 1 (to the external communication network N if the correction information communicator 50 is a direct communication unit), the correction information communicator 50 may be provided in the interior of the roof 17, in the interior of a base that supports the operator's seat 4, or in the interior of the steering device 5 (for example, inside an instrument panel located forward of the steering wheel 13 or inside a cover that covers the steering mechanism 14).

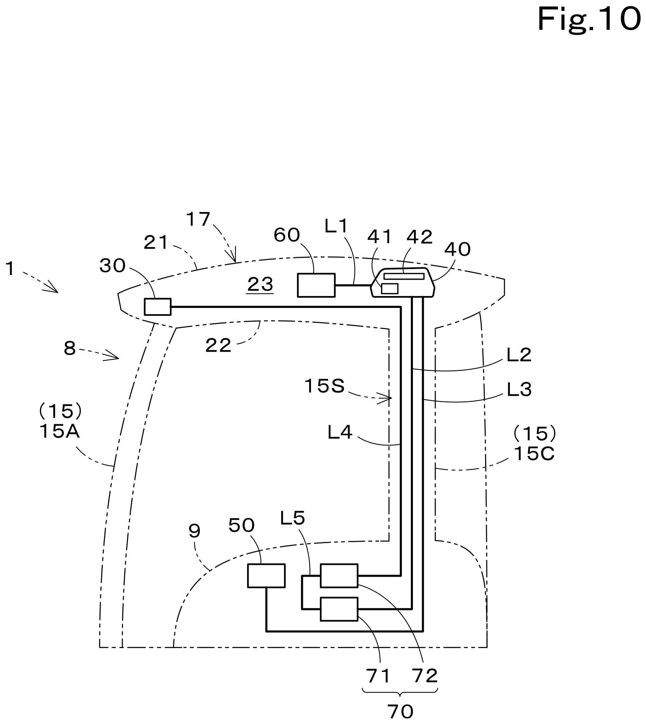

As illustrated in FIGS. 6 and 10, the work information communicator 60 is housed in the interior space 23 of the roof 17. In the present example embodiment, the work information communicator 60 is provided in a rear portion of the interior of the roof 17 at a location shifted rightward.

The working machine 1 includes a first communication cable L1. The first communication cable L1 provides a communicative connection between the position detector 40 and the work information communicator 60. In other words, the work information communicator 60 is connected to the position detector 40 by the first communication cable L1 and receives the measured position information from the position detector 40 through the first communication cable L1.

The first communication cable L1 is guided through the rear portion of the interior of the roof 17 and connects the position detector 40 and the work information communicator 60 to each other. More specifically, the first communication cable L1 extends from the position detector 40 to the work information communicator 60 along the upper surface of the rear upper frame 18B in the interior space 23 of the roof 17.

As long as the work information communicator 60 is reliably connectable to the external communication network N (to the wireless communication terminal P of the operator or the working machine 1 if the work information communicator 60 is a near-field wireless communication unit), the work information communicator 60 may be provided in the interior of one of the consoles 9, in the interior of the base that supports the operator's seat 4, or in the interior of the steering device 5 (for example, inside the instrument panel located forward of the steering wheel 13 or inside the cover that covers the steering mechanism 14).

As illustrated in FIG. 3, the monitor 71 and the image processor 72 are housed in the interior of one of the consoles 9. The monitor 71 and the image processor 72 are both provided in the interior of the console 9 to the left of the operator's seat 4. The monitor 71 and the image processor 72 are adjacent to each other in the interior of the console 9.

The monitor 71 and the image processor 72 may be provided in the interior of the console 9 to the right of the operator's seat 4, or be provided in the interiors of different ones of the left and right consoles 9. One or both of the monitor 71 and the image processor 72 may be provided in the interior of the roof 17, in the interior of the base that supports the operator's seat 4, or in the interior of the steering device 5 (for example, inside the instrument panel located forward of the steering wheel 13 or inside the cover that covers the steering mechanism 14).

As illustrated in FIG. 10, the working machine 1 includes a second communication cable L2, a third communication cable L3, a fourth communication cable L4, and a fifth communication cable L5. The second communication cable L2 provides a communicative connection between the position detector 40 and the monitor 71 serving as the controller 70. In other words, the monitor 71 is connected to the position detector 40 by the second communication cable L2, and receives the measured position information from the position detector 40 through the second communication cable L2.

The second communication cable L2 is guided from the roof 17 to the corresponding console 9 through the interior of one of the pillars 15 and connects the position detector 40 and the monitor 71 to each other. More specifically, the second communication cable L2 extends from the position detector 40 to a hollow 15S of the left rear pillar 15C through the interior space 23 of the roof 17, and further extends from the hollow 15S to the monitor 71 through the interior of the left console 9. Thus, the second communication cable L2 is not exposed to the outside of the cabin 8.

The third communication cable L3 provides a communicative connection between the position detector 40 and the correction information communicator 50. In other words, the correction information communicator 50 is connected to the position detector 40 by the third communication cable L3, and transmits the correction information to the position detector 40 through the third communication cable L3.

The third communication cable L3 is guided from the roof 17 to the corresponding console 9 through the interior of one of the pillars 15 and connects the position detector 40 and the correction information communicator 50 to each other. More specifically, the third communication cable L3 extends from the position detector 40 to the hollow 15S of the left rear pillar 15C through the interior space 23 of the roof 17, and further extends from the hollow 15S to the correction information communicator 50 through the interior of the left console 9. Thus, the third communication cable L3 is not exposed to the outside of the cabin 8.

The fourth communication cable L4 provides a connection between the object sensor 30 and the image processor 72. In other words, the image processor 72 is connected to the object sensor 30 by the fourth communication cable L4, and receives the detection information from the object sensor 30 through the fourth communication cable L4.

The fourth communication cable L4 is guided from the roof 17 to the corresponding console 9 through the interior of one of the pillars 15 and connects the object sensor 30 and the image processor 72 to each other. More specifically, the fourth communication cable L4 extends from the object sensor 30 to the hollow 15S of the left rear pillar 15C through the interior space 23 of the roof 17, and further extends to the image processor 72 through the interior of the left console 9. Thus, the fourth communication cable L4 is not exposed to the outside of the cabin 8.

The fifth communication cable L5 provides a communicative connection between the image processor 72 and the monitor 71. In other words, the monitor 71 is connected to the image processor 72 by the fifth communication cable L5, and receives the result of image analysis from the image processor 72 through the fifth communication cable L5.

The fifth communication cable L5 is guided through the interior of the corresponding console 9 and connects the monitor 71 and the image processor 72 to each other. As described above, the monitor 71 and the image processor 72 are adjacent to each other. Thus, the monitor 71 can be connected to the image processor 72 by the fifth communication cable L5 that is relatively short. In addition, the fifth communication cable L5 is not exposed to the outside of the cabin 8.

### Variations

In the working machine 1 of the above-described example embodiment, the position detector 40 is housed in the rear portion of the interior of the roof 17. However, as long as the position detector 40 can continuously and reliably receive the satellite signals transmitted from the positioning satellite G, the location of the position detector 40 is not limited to the rear portion of the interior of the roof 17.

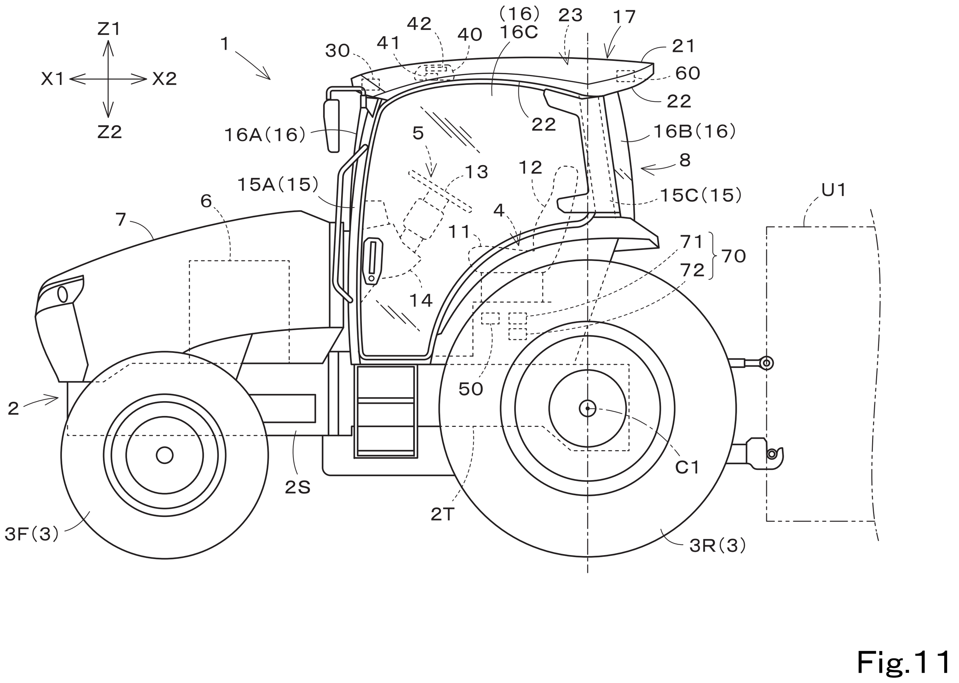

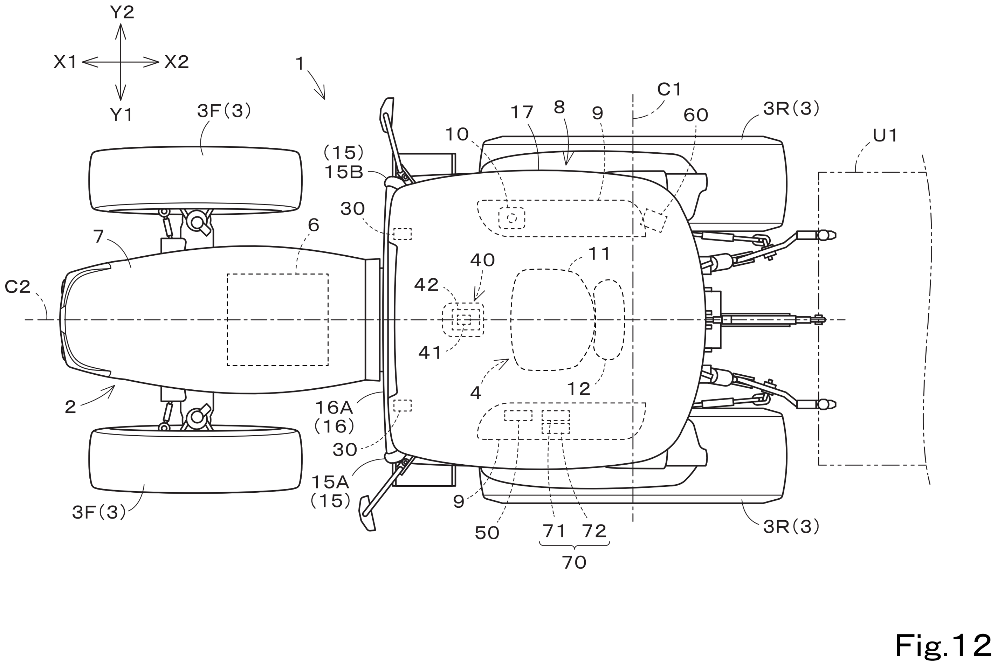

For example, as illustrated in FIGS. 11 and 12, in a working machine 1 of a first variation, the position detector 40 is housed in a front portion of the interior of the roof 17. More specifically, the position detector 40 is located forward of the seat portion 11 of the operator's seat 4 in the interior space 23 of the roof 17. As illustrated in FIG. 12, the position detector 40 is located on the machine body axis C2 when viewed in the up-down direction of the machine body 2.

In the working machine 1 of the first variation, the position detector 40 is located forward of the rear shaft axis C1 when viewed in the up-down direction of the machine body 2. Accordingly, the measurement unit 42 measures the machine body position by performing correction so that the reference center point of the machine body 2 is not the position of the satellite communication unit 41 but is a predetermined position that is rearward of the satellite communication unit 41.

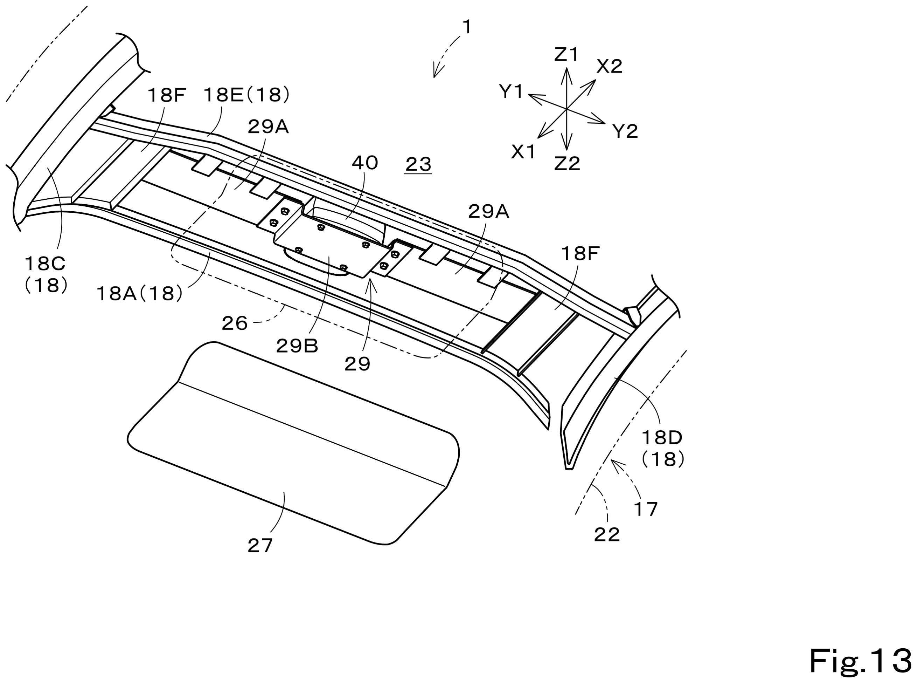

As illustrated in FIGS. 5 and 13, the working machine 1 of the first variation includes at least one connection frame 18F and a device mount frame 29. The upper frame 18 includes the connection frame 18F. The connection frame 18F extends between the front upper frame 18A and the center upper frame 18E of the cabin 8 in the front-rear direction and connect the front upper frame 18A and the center upper frame 18E to each other. In other words, the connection frame 18F spans between the front upper frame 18A and the center upper frame 18E. Two connection frames 18F are provided between the front upper frame 18A and the center upper frame 18E at a distance from each other in the left-right direction.

The device mount frame 29 is a plate-shaped frame elongated in the left-right direction. The device mount frame 29 extends between the left and right connection frames 18F in the left-right direction and connects the left and right connection frames 18F to each other. In other words, the device mount frame 29 spans between the left and right connection frames 18F.

The device mount frame 29 includes support frames (first frame portions) 29A and an attachment plate (second frame portion) 29B.

Each support frame 29A is a substantially flat-plate-shaped plate piece having a first end fixed to an upper surface of one of the connection frames 18F and a second end extending toward the other support frame 29A opposite thereto. In other words, the support frames 29A are connected to and supported by the upper surfaces of the connection frames 18F in a cantilever manner.

The attachment plate 29B is a plate piece bent to be recessed downward. The attachment plate 29B is removably connected to and supported by the second ends of the left and right support frames 29A with fasteners, such as screws. The position detector 40 is attached to an upper surface of the attachment plate 29B.

As illustrated in FIG. 13, the inner roof 22 includes an access hole 26 below the attachment plate 29B. The access hole 26 extends through the inner roof body 25 and provides communication between the inside and outside of the roof 17. The access hole 26 is covered by an access hole cover 27.

The access hole cover 27 is connected to the inner roof body 25 with a fastener, such as a screw, and covers the access hole 26 from below the inner roof body 25 (interior of the cabin 8). Accordingly, when the position detector 40 and/or another device housed in the interior of the roof 17 is subjected to maintenance, the worker can access the device storage space 23S from the interior of the cabin 8 through the access hole 26 by removing the access hole cover 27 from the inner roof 22.

The access hole 26 is large enough to allow the position detector 40 to be taken out from the interior of the roof 17 together with the attachment plate 29B. Accordingly, the position detector 40 can be taken out from the interior of the roof 17 through the access hole 26 by removing the access hole cover 27 from the inner roof 22 and removing the attachment plate 29B from the support frames 29A.

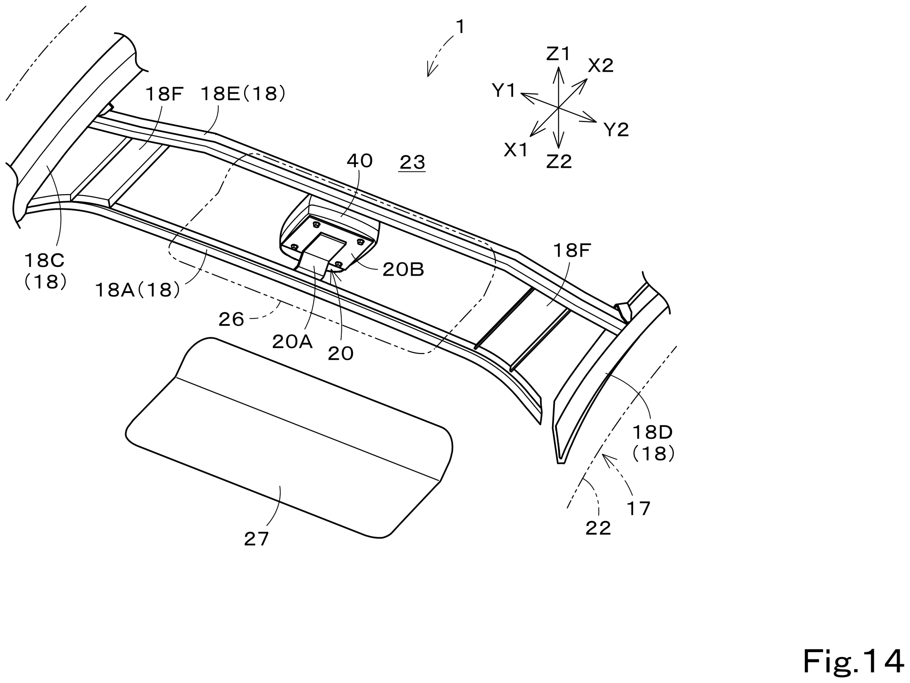

In the working machine 1 of the above-described first variation, the position detector 40 is attached to an upper portion of a central portion of the device mount frame 29 in the left-right direction, the device mount frame 29 spanning between the left and right connection frames 18F. However, as illustrated in FIG. 14, the position detector 40 may be attached to a rear end portion of a device mount frame 20 extending rearward from the front upper frame 18A.

More specifically, in a working machine 1 of a second variation, the front upper frame 18A includes the device mount frame 20. The device mount frame 20 is provided on an upper portion of the front upper frame 18A. The position detector 40 is attached to the upper portion of the front upper frame 18A with the device mount frame 20 provided therebetween. The device mount frame 20 extends rearward relative to the front upper frame 18A from the upper surface of the front upper frame 18A. The position detector 40 is attached to the rear end portion of the device mount frame 20.

The device mount frame 20 includes a support frame (first frame portion) 20A and an attachment plate (second frame portion) 20B. The support frame 20A is a plate piece bent into a substantially L-shaped form, and includes a front end portion fixed to an upper surface of the front upper frame 18A and a rear end portion extending rearward from the front upper frame 18A. In other words, the support frame 20A is connected to and supported by the upper surface of the front upper frame 18A in a cantilever manner.

The support frame 20A is inserted through the access hole 26 in a front portion of the inner roof 22 and attached to the upper portion of the front upper frame 18A. The support frame 20A is positioned in face of the access hole 26 in the interior of the roof 17. The access hole 26 is covered by the access hole cover 27 from below the inner roof 22.

The attachment plate 20B is a flat, rectangular plate body, and is supported by the support frame 20A from below. The attachment plate 20B is fixed to an upper portion of a rear end portion of the support frame 20A. The position detector 40 is removably connected to the attachment plate 20B. In other words, the position detector 40 is attached to a rear end portion of the device mount frame 20.

The position detector 40 is connected to an upper surface of the attachment plate 20B with a fastener, such as a screw. The position detector 40 is housed in the front portion of the interior of the roof 17. The position detector 40 is located between the front upper frame 18A and the center upper frame 18E in the interior space 23 of the roof 17. Thus, in the working machine 1 of the second variation, the position detector 40 is located rearward of the front upper frame 18A. Accordingly, the height of the roof 17 (overall height of the working machine 1) can be reduced.

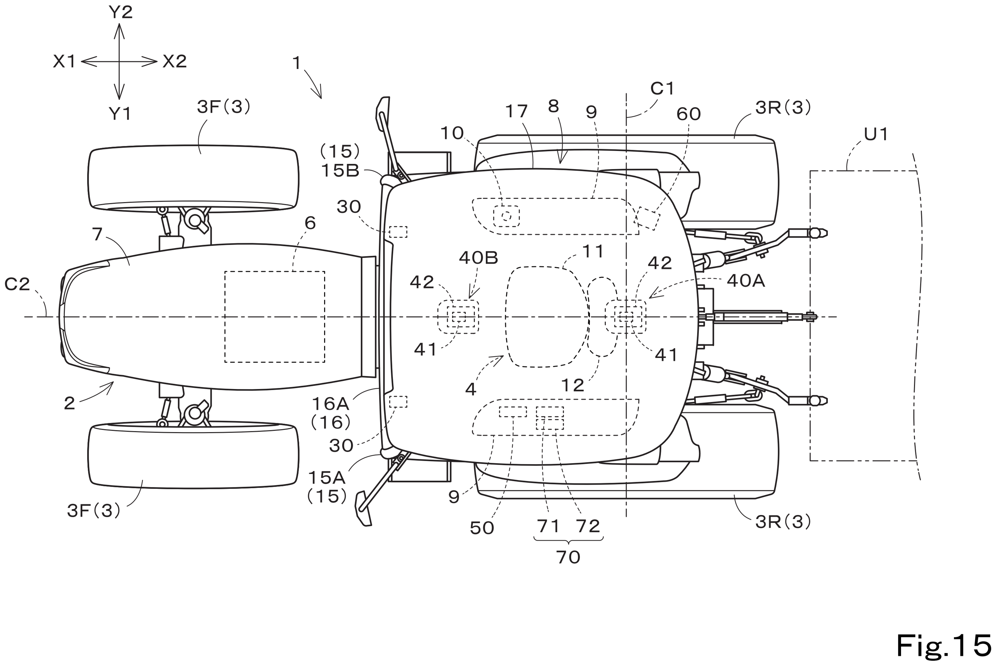

The working machine 1 of the above-described example embodiment includes only one position detector 40. However, the working machine 1 may include a plurality of position detectors 40. For example, as illustrated in FIG. 15, a working machine 1 of a third variation includes two position detectors 40 housed at front and rear locations in the interior space 23 of the roof 17. The working machine 1 of the third variation acquires the position information of the working machine 1 (measured position information) with these two position detectors 40.

The position detectors 40 include a first position detector 40A and a second position detector 40B. The first position detector 40A is housed in the rear portion of the interior of the roof 17. The second position detector 40B is housed in the front portion of the interior of the roof 17.

The first position detector 40A is located rearward of the seat portion 11 of the operator's seat 4 in the interior space 23 of the roof 17. The second position detector 40B is located forward of the seat portion 11 of the operator's seat 4 in the interior space 23 of the roof 17 at a distance from the seat portion 11. In the working machine 1 of the third variation, the first position detector 40A and the second position detector 40B are both located on the machine body axis C2 when viewed in the up-down direction of the machine body 2.

The first position detector 40A is located on the rear shaft axis C1 when viewed in the up-down direction of the machine body 2. The second position detector 40B is located forward of the rear shaft axis C1 when viewed in the up-down direction of the machine body 2. Accordingly, in the working machine 1 of the third variation, the traveling direction of the machine body 2 (heading) can be determined based on the difference between the measured position information received by the first position detector 40A and the measured position information received by the second position detector 40B.

In the working machine 1 of the third variation, similarly to the position detector 40 in the working machine 1 of the first variation, the second position detector 40B may be attached to the device mount frame 29 spanning between the left and right connection frames 18F (see FIGS. 5 and 13). Alternatively, similarly to the position detector 40 in the working machine 1 of the second variation, the second position detector 40B may be attached to the device mount frame 20 extending rearward from the front upper frame 18A (see FIG. 14).

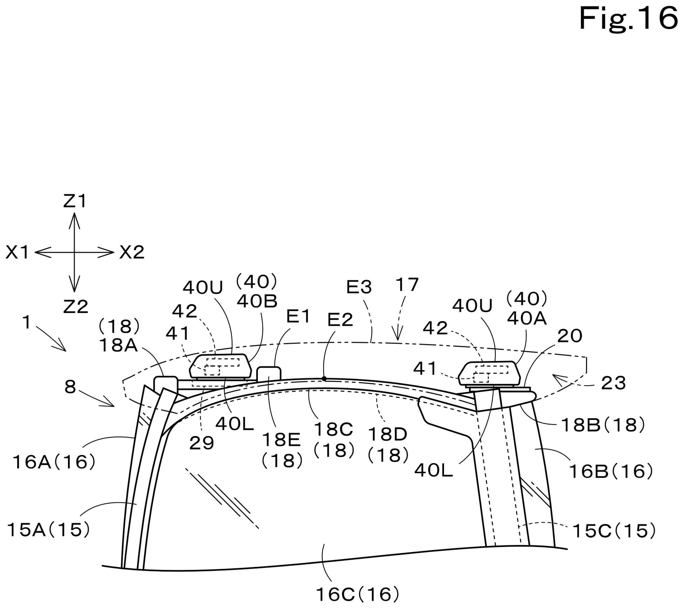

As illustrated in FIG. 16, in the working machine 1 of the third variation, the first position detector 40A is located between the front upper frame 18A and the rear upper frame 18B and rearward of the curve apices E2 of the side upper frames 18C and 18D in the front-rear direction. The second position detector 40B is located between the front upper frame 18A and the rear upper frame 18B and forward of the curve apices E2 in the front-rear direction.

As described above, in the working machine 1 of the third variation, the first position detector 40A and the second position detector 40B are respectively located rearward and forward of the curve apices E2 of the side upper frames 18C and 18D. Accordingly, a large space can be provided above the operator's seat 4, and the height of the roof 17 (overall height of the working machine 1) can be reduced.

In the working machine 1 of the third variation, the first position detector 40A is attached to the device mount frame 20 such that an upper surface 40U of the first position detector 40A is located higher than the upper surface E1 of the center upper frame 18E. The second position detector 40B is attached to the device mount frame 29 such that an upper surface 40U of the second position detector 40B is located higher than the upper surface E1 of the center upper frame 18E. Accordingly, the space above the operator's seat 4 can be increased.

In the working machine 1 of the above-described example embodiment, the bulge 24 serving as the access hole cover 27 is removably connected to the inner roof body 25. However, the bulge 24 may be swingably connected to the inner roof body 25 with a hinge mechanism, or be connected to an edge portion of the access hole 26 with a sliding mechanism such that the bulge 24 is slidable in the front-rear direction or the left-right direction. In such a case, the bulge 24 can be opened without accidentally dropping the bulge 24 or having to find a place for setting the bulge 24 down. As a result, the devices housed in the interior of the roof 17 can be more easily inspected or replaced.

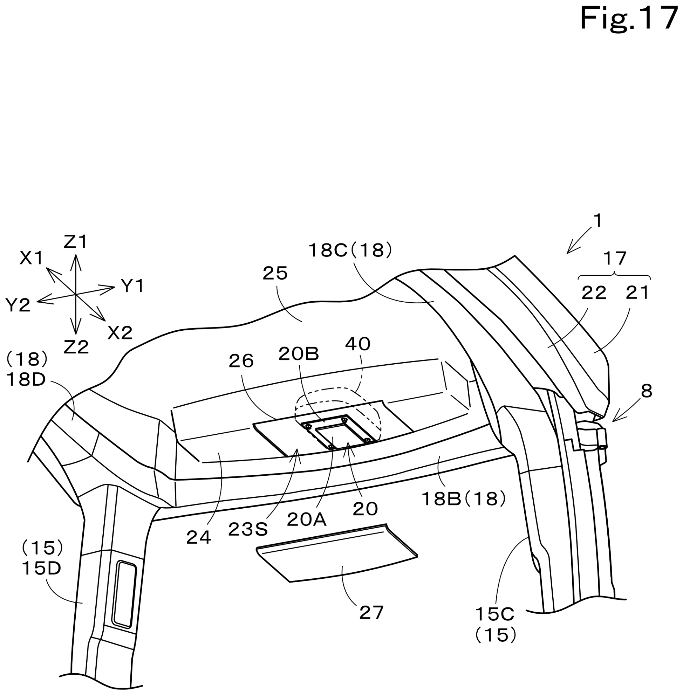

In the working machine 1 of the above-described example embodiment, substantially the entire bulge 24 serves as the access hole cover 27 and is removable from the inner roof body 25. However, as illustrated in FIG. 17, the bulge 24 may include a portion that serves as the access hole cover 27 and that is removable from the inner roof body 25.

More specifically, in a working machine 1 of a fourth variation, the bulge 24 is integral with the lower surface of the inner roof body 25. The bulge 24 includes an access hole 26 and an access hole cover 27. The access hole 26 is provided in a central portion of the bulge 24 in the left-right direction. The access hole cover 27 is removably connected to the bulge 24 and covers the access hole 26 from below the roof 17. Accordingly, when the position detector 40 and/or another device housed in the interior of the roof 17 is subjected to maintenance, the worker can access the device storage space 23S from the interior of the cabin 8 through the access hole 26 by removing the access hole cover 27 from the bulge 24.

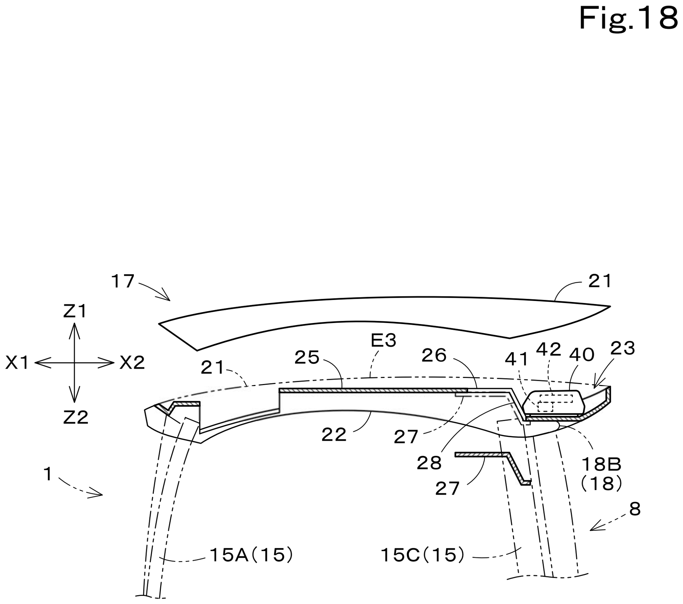

In the working machine 1 of the above-described example embodiment, the inner roof 22 includes the bulge 24, and the position detector 40 is located in the interior space (device storage space) 23S of the bulge 24. However, as illustrated in FIG. 18, it is not necessary that the inner roof 22 includes the bulge 24.

More specifically, in a working machine 1 of a fifth variation, the inner roof 22 includes a rear wall portion 28 instead of the bulge 24. The rear wall portion 28 extends along a rear edge portion of the inner roof 22. The rear wall portion 28 extends upward from a front edge portion of the rear upper frame 18B. An access hole 26 is provided along a corner portion between the lower surface of the inner roof 22 and the rear wall portion 28. The inner roof 22 includes an access hole cover 27. The access hole cover 27 is substantially L-shaped in a side sectional view and is capable of covering the access hole 26 along the above-described corner portion. The access hole cover 27 is removably connected to the inner roof 22.

The position detector 40 is housed in a space 23 defined in the rear portion of the interior of the roof 17 and is fixed to the upper surface of the inner roof 22 with a fastener, such as a screw. The position detector 40 is positioned in face of the access hole 26 in the space 23 in the rear portion of the interior of the roof 17. Accordingly, when the position detector 40 and/or another device is subjected to maintenance, the worker can access the device storage space 23S from the interior of the cabin 8 through the access hole 26 by opening the access hole cover 27.

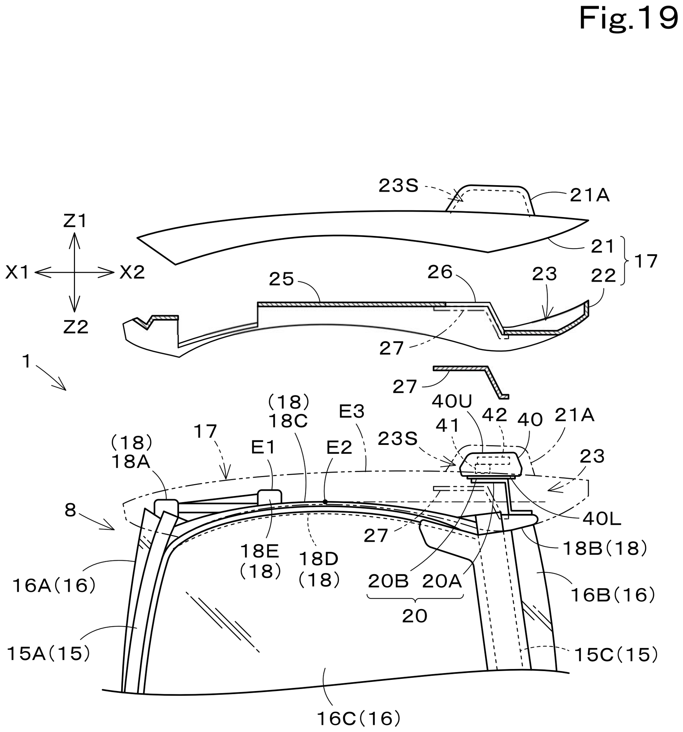

In the working machine 1 of the above-described example embodiment, the position detector 40 is provided in the interior space (device storage space) 23S of the bulge 24 included in the inner roof 22. However, as illustrated in FIG. 19, the position detector 40 may be provided in a space (device storage space) 23S inside a raised portion 21A of the outer roof 21.

More specifically, in a working machine 1 of a sixth variation, the outer roof 21 includes the raised portion 21A. The raised portion 21A is provided on the roof upper surface E3 of the outer roof 21. The raised portion 21A protrudes upward from the outer roof 21 and defines the device storage space 23S capable of housing the position detector 40 at an upper portion of the interior space 23 of the roof 17. The position detector 40 is located in the device storage space 23S inside the raised portion 21A. The position detector 40 is attached to the device mount frame 20 such that the upper surface 40U of the position detector is located higher than the roof upper surface E3 of the roof 17.

The raised portion 21A is box-shaped and large enough to cover the entire position detector 40 from above. The raised portion 21A is made of a material with high radio-wave transmittance. The position detector 40 is located in a space (device storage space) 23S inside the raised portion 21A. Accordingly, the position detector 40 is capable of continuously and reliably receiving the satellite signals transmitted from the positioning satellite G.

The raised portion 21A may be integral with the outer roof 21. Alternatively, the raised portion 21A may be removable from the outer roof 21. For example, the raised portion 21A is connected to the outer roof 21 with a fastener, such as a screw, and covers the position detector 40 from above the roof 17 (space outside the cabin 8). Accordingly, when the position detector 40 housed in the interior space 23 of the roof 17 is subjected to maintenance, the worker can access the position detector 40 from the space outside the cabin 8 by removing the raised portion 21A from the outer roof 21.

The inner roof 22 includes an access hole 26 and an access hole cover 27. The access hole 26 extends through the inner roof body 25 and provides communication between the inside and outside of the roof 17. The access hole 26 is large enough to allow the position detector 40 to be taken out from the interior of the roof 17. The access hole 26 is covered by the access hole cover 27.

The access hole cover 27 is connected to the inner roof body 25 with a fastener, such as a screw, and covers the access hole 26 from below the inner roof body 25 (interior of the cabin 8). Accordingly, when the position detector 40 housed in the interior of the roof 17 (device storage space 23S) is subjected to maintenance, the worker can access the device storage space 23S from the interior of the cabin 8 through the access hole 26 by removing the access hole cover 27 from the inner roof 22.

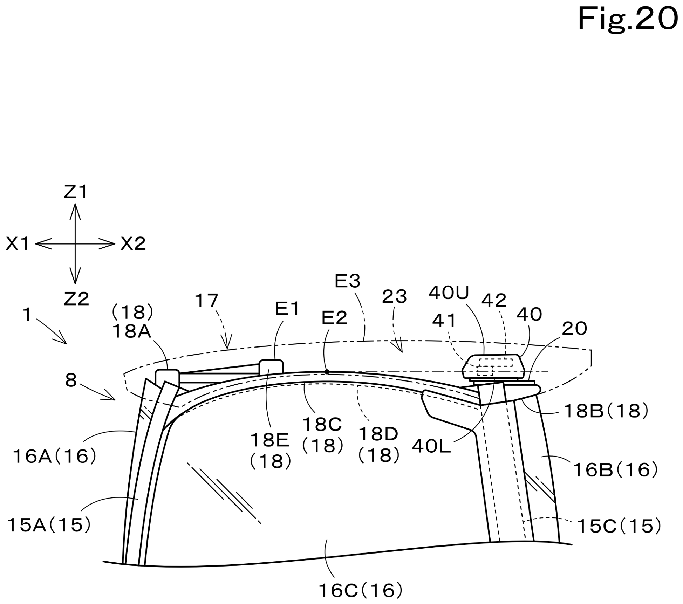

In the working machine 1 of the above-described example embodiment, the position detector 40 is attached to the device mount frame 20 such that the lower surface 40L of the position detector 40 is at substantially the same height as the curve apices E2 of the side upper frames 18C and 18D. However, as illustrated in FIG. 20, the position detector 40 may be attached to the device mount frame 20 such that the lower surface 40L of the position detector 40 is located lower than the curve apices E2 of the side upper frames 18C and 18D.

More specifically, in a working machine 1 of a seventh variation, the side upper frames 18C and 18D are configured such that the curve apices E2 of the side upper frames 18C and 18D are located higher than the upper surface of the rear upper frame 18B. The device mount frame 20 is a flat plate body, and is fixed face-to-face to the upper surface of the rear upper frame 18B. The position detector 40 is attached to the upper surface of the device mount frame 20. Accordingly, the position detector 40 is positioned such that the lower surface 40L of the position detector 40 is located lower than the curve apices E2 of the side upper frames 18C and 18D. Accordingly, the height of the roof 17 can be reduced.

In the working machine 1 of the above-described example embodiment, the device mount frame 20 is attached to the rear upper frame 18B such that the lower surface 40L of the position detector 40 is located higher than the upper surface (apex) E1 of the center upper frame 18E. However, as illustrated in FIG. 20, the position detector 40 may be attached to the device mount frame 20 such that the lower surface 40L of the position detector 40 is located lower than the upper surface (apex) E1 of the center upper frame 18E.

More specifically, in the working machine 1 of the seventh variation, the center upper frame 18E is configured such that the upper surface E1 of the center upper frame 18E is located higher than the upper surface of the rear upper frame 18B. As described above, the position detector 40 is attached to the upper surface of the rear upper frame 18B with the flat, plate-shaped device mount frame 20 provided therebetween. Thus, the lower surface 40L of the position detector 40 is located lower than the upper surface E1 of the center upper frame 18E. Accordingly, the height of the roof 17 can be reduced.

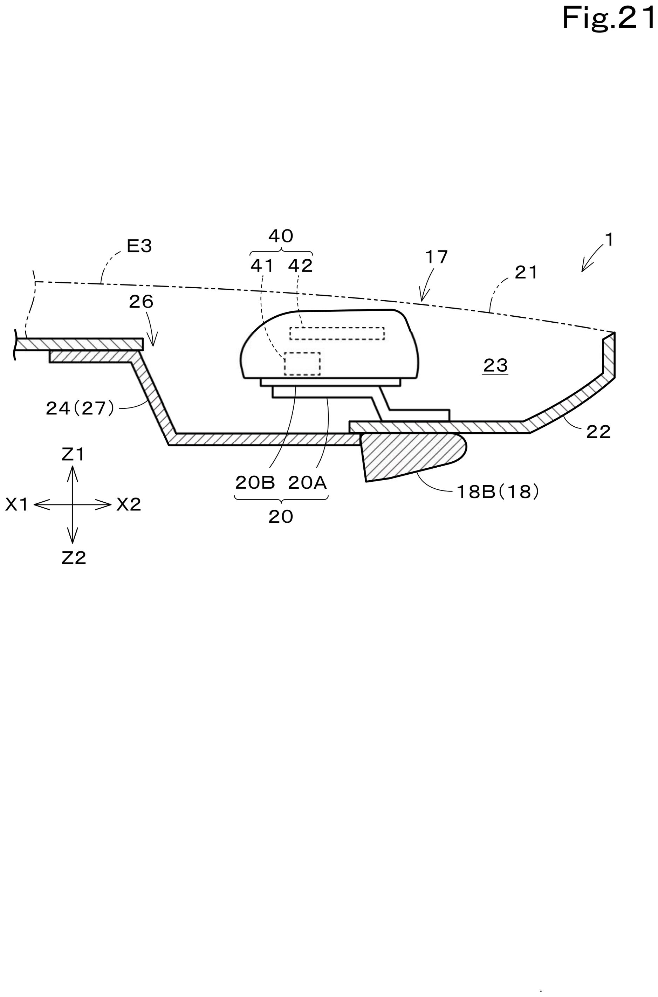

In the working machine 1 of the above-described example embodiment, the device mount frame 20 is attached to the upper frame 18. However, as illustrated in FIG. 21, the device mount frame 20 may be attached to the inner roof 22. More specifically, in a working machine 1 of an eighth variation, the device mount frame 20 is provided on the upper surface of the inner roof 22. The device mount frame 20 is attached to the inner roof 22 and supports the position detector 40. In other words, the position detector 40 is attached to the upper surface of the inner roof 22 with the device mount frame 20 provided therebetween. Alternatively, the position detector 40 may be directly attached to the inner roof 22.

The device mount frame 20 is adjacent to the access hole 26 in the inner roof 22. The device mount frame 20 extends forward from a front edge of the access hole 26 on the upper surface of the inner roof 22. The position detector 40 is attached to a front end portion of the device mount frame 20. The device mount frame 20 includes a support frame (first frame portion) 20A and an attachment plate (second frame portion) 20B.

The support frame 20A includes a rear end portion fixed to the upper surface of the inner roof 22 and a front end portion extending forward relative to the rear upper frame 18B. In other words, the support frame 20A is connected to and supported by the upper surface of the inner roof 22 in a cantilever manner. The support frame 20A is in face of the access hole 26 in the rear portion of the inner roof 22 in the interior of the roof 17.

The attachment plate 20B is connected to and supported by an upper portion of a front end portion of the support frame 20A. The position detector 40 is removably connected to the attachment plate 20B. The position detector 40 is connected to an upper portion of a front end portion of the attachment plate 20B with a fastener, such as a screw.

According to the working machine 1 of the eighth variation, the position detector 40 can be located at an appropriate position in the interior space 23 of the roof 17 in consideration of the positioning function and ease of maintenance, and can be securely fixed.

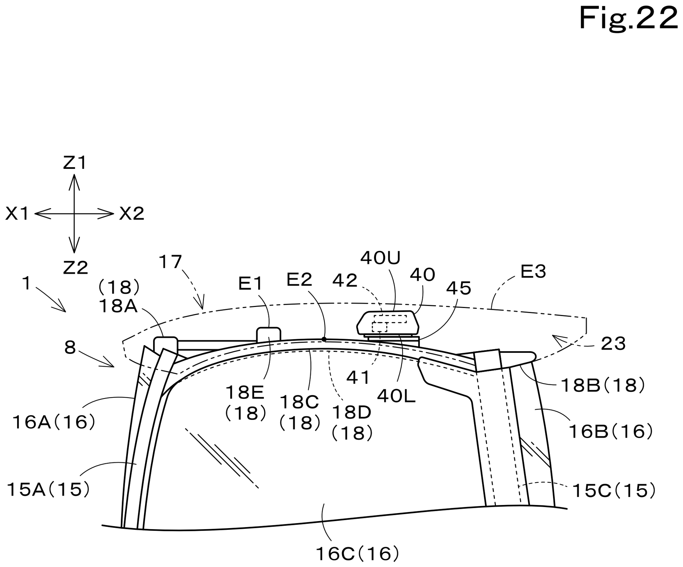

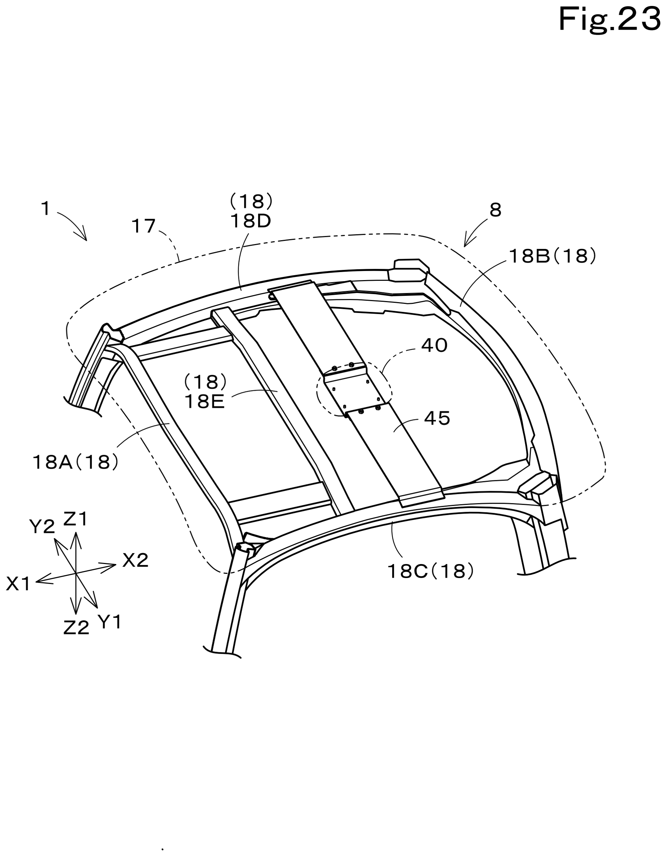

In the working machine 1 of the above-described example embodiment, the device mount frame 20 is attached to the rear upper frame 18B. However, as illustrated in FIGS. 22 and 23, the device mount frame 20 may be attached to the side upper frames 18C and 18D.

More specifically, the working machine 1 of the eighth variation includes a plate-shaped device mount frame 45 elongated in the left-right direction. The device mount frame 45 extends between the left side upper frame 18C and the right side upper frame 18D in the left-right direction and connects the left and right side upper frames 18C and 18D to each other. In other words, the device mount frame 45 spans between the left and right side upper frames 18C and 18D. The device mount frame 45 is attached to the side upper frames 18C and 18D at a location rearward of the curve apices E2 of the side upper frames 18C and 18D.

The position detector 40 is attached to the upper surface of the device mount frame 45. The position detector 40 of the eighth variation is attached to each of the side upper frames 18C and 18D with the device mount frame 45 provided therebetween such that the lower surface 40L of the position detector 40 is located higher than the curve apices E2 of the side upper frames 18C and 18D and lower than the upper surface (apex) E1 of the center upper frame 18E. Thus, the position detector 40 is supported by the upper frame 18 at a higher position, so that a large space can be provided above the operator's seat 4.

Example embodiments of the present invention provide working machines 1 described in the following items.

(Item 1) A working machine 1 including a machine body 2, a traveling device 3 to support the machine body 2 such that the machine body 2 is allowed to travel, an operator's seat 4, a protector 8 provided on the machine body 2 to protect the operator's seat 4, and a position detector 40 to acquire position information from one or more positioning satellites, wherein the protector 8 includes a roof 17 provided above the operator's seat 4, and the position detector 40 is housed in the roof 17.

With the working machine 1 of item 1, the possibility of contact between the position detector 40 and obstacles, such as tree branches and flying stones, can be eliminated or reduced, so that the positioning function can be reliably maintained for a long period of time. In addition, since the position detector 40 is located in the interior of the roof 17, the design of the working machine 1 can be improved.

(Item 2) The working machine 1 according to item 1, wherein the position detector 40 is housed in a rear portion of an interior of the roof 17.

With the working machine 1 of item 2, the possibility of contact between the position detector 40 and obstacles can be reliably eliminated or reduced when, in particular, the working machine 1 is moving, so that the positioning function can be more reliably maintained. Furthermore, the rear portion of the roof 17 has a larger space than the central portion of the roof 17 in the front-rear direction, and therefore allows for greater flexibility in positioning the position detector 40. Accordingly, when the position detector 40 is located in the rear portion of the interior of the roof 17 as in the working machine 1 according to item 2, the roof 17 can have a structure with improved design.

(Item 3) The working machine 1 according to item 2, wherein the position detector 40 is located rearward of a seat portion 11 of the operator's seat 4.

With the working machine 1 of item 3, the position detector 40 is less likely to interfere with the operator getting into or out of the operator's seat 4 or block the operator's view during operation.

Accordingly, the reliability of the positioning function can be ensured, and the user-friendliness of the working machine 1 can be maintained.

(Item 4) The working machine 1 according to item 2 or 3, wherein the traveling device 3 includes a front traveling device 3F provided at a front portion of the machine body 2, and a rear traveling device 3R provided at a rear portion of the machine body 2, and the position detector 40 is located on a rear shaft axis C1 when viewed in an up-down direction of the machine body 2, the rear shaft axis C1 extending in a left-right direction along an axis of a drive shaft of the rear traveling device 3R.

With the working machine 1 of item 4, the machine body position can be measured assuming that the position (detection point) of the position detector 40 is the reference center point of the machine body 2 in the front-rear direction. In other words, the position detector 40 does not need to perform a correction process for the detection position obtained by the position detector 40. Accordingly, the accuracy and reliability of the positioning function can be improved.

(Item 5) The working machine 1 according to item 4, wherein the position detector 40 is located on a machine body axis C2 when viewed in an up-down direction of the machine body 2, the machine body axis C2 extending in a front-rear direction through a center of the machine body 2 in the left-right direction.

With the working machine 1 of item 5, the machine body position can be measured assuming that the position (detection point) of the position detector 40 is the reference center point of the machine body 2 in the left-right direction. In other words, the position detector 40 does not need to perform a correction process for the detection position obtained by the position detector 40. Accordingly, the accuracy and reliability of the positioning function can be improved.

(Item 6) The working machine 1 according to any one of items 1 to 5, wherein the position detector 40 includes a plurality of the position detectors 40 including a first position detector 40A housed in a rear portion of an interior of the roof 17, and a second position detector 40B located forward of the first position detector 40A at a distance from the first position detector 40A.

With the working machine 1 of item 6, the traveling direction of the machine body 2 (heading) can be determined based on the difference between the measured position information received by the first position detector 40A and the measured position information received by the second position detector 40B. Accordingly, the accuracy and reliability of the positioning function can be improved.

(Item 7) The working machine 1 according to item 6, wherein the protector 8 includes an upper frame 18, the upper frame 18 includes a front upper frame 18A included in an upper front portion of the protector 8, a rear upper frame 18B included in an upper rear portion of the protector 8, and left and right side upper frames 18C, 18D included in an upper left portion and an upper right portion of the protector 8, each of the side upper frames 18C, 18D is rounded to be convex upward, the first position detector 40A is located between the front upper frame 18A and the rear upper frame 18B such that the first position detector 40A is located rearward of curve apices E2 of the side upper frames 18C, 18D, and the second position detector 40B is located between the front upper frame 18A and the rear upper frame 18B such that the second position detector 40B is located forward of the curve apices E2.

With the working machine 1 of item 7, the traveling direction of the machine body 2 (heading) can be determined based on the difference between the measured position information received by the first position detector 40A and the measured position information received by the second position detector 40B. Accordingly, the accuracy and reliability of the positioning function can be improved.

In addition, as described above, the first position detector 40Aand the second position detector 40B are respectively located rearward and forward of the curve apices E2 of the side upper frames 18C and 18D in the front-rear direction. Accordingly, a large space can be provided above the operator's seat 4, and the height of the roof 17 (overall height of the working machine 1) can be reduced.

(Item 8) The working machine 1 according to any one of items 1 to 7, further including a device mount frame 20 to support the position detector 40, wherein the protector 8 includes an upper frame 18, and the device mount frame 20 is attached to the upper frame 18.

With the working machine 1 of item 8, the position detector 40 is attached to the upper frame 18 of the protector 8, which protects the operator's seat 4, with the device mount frame 20 provided therebetween. Accordingly, the position detector 40 can be reliably attached, and the accuracy and reliability of the positioning function can be improved.

(Item 9) The working machine according to item 8, wherein the upper frame 18 includes a rear upper frame 18B included in an upper rear portion of the protector 8, the device mount frame 20 extends forward from the rear upper frame 18B, and the position detector 40 is attached to a front end portion of the device mount frame 20.

With the working machine 1 of item 9, since the position detector 40 can be located forward of the rear upper frame 18B, the height of the roof 17 (overall height of the working machine 1) can be lower than when the position detector 40 is provided above the rear upper frame 18B. Accordingly, the reliability of the positioning function can be ensured, and the design of the working machine 1 can be improved. In addition, since the position detector 40 is located forward of the rear upper frame 18B as described above, the roof 17 may have an upper surface structure with less likelihood of rainwater and dust accumulation.

(Item 10) The working machine 1 according to item 8 or 9, wherein the upper frame 18 includes a front upper frame 18A included in an upper front portion of the protector 8, the device mount frame 20 extends rearward from the front upper frame 18A, and the position detector 40 is attached to a rear end portion of the device mount frame 20.

With the working machine 1 of item 10, since the position detector 40 can be located rearward of the front upper frame 18A, the height of the roof 17 (overall height of the working machine 1) can be lower than when the position detector 40 is provided above the front upper frame 18A. Accordingly, the reliability of the positioning function can be ensured, and the design of the working machine 1 can be improved. In addition, since the position detector 40 is located rearward of the front upper frame 18A as described above, the roof 17 may have an upper surface structure with less likelihood of rainwater and dust accumulation.

(Item 11) The working machine 1 according to any one of items 6 to 10, wherein the upper frame 18 includes left and right side upper frames 18C, 18D included in an upper left portion and an upper right portion of the protector 8, each of the side upper frames 18C, 18D is rounded to be convex upward, and the position detector 40 is attached to the device mount frame 20 such that a lower surface 40L of the position detector 40 is located lower than curve apices E2 of the side upper frames 18C, 18D.

With the working machine 1 of item 11, since the height of the roof 17 (overall height of the working machine 1) can be lower than when the position detector 40 is located higher than the side upper frames 18C and 18D, the reliability of the positioning function can be ensured, and the design of the working machine 1 can be improved. In addition, since the lower surface 40L of the position detector 40 is located lower than the curve apices E2 of the side upper frames 18C and 18D as described above, the roof 17 may have an upper surface structure with less likelihood of rainwater and dust accumulation.

(Item 12) The working machine 1 according to any one of items 1 to 11, further including a device mount frame 20 to support the position detector 40, wherein the protector 8 includes an upper frame 18, the upper frame 18 includes left and right side upper frames 18C, 18D included in an upper left portion and an upper right portion of the protector 8, each of the side upper frames 18C, 18D is rounded to be convex upward, and the device mount frame 20 is attached to at least one of the side upper frames 18C, 18D.

With the working machine 1 of item 12, the position detector 40 can be supported at a higher position on the upper frame 18, so that a large space can be provided above the operator's seat 4. Accordingly, even though the position detector 40 is housed in the interior of the roof 17, the position detector 40 is less likely to interfere with the operator getting into or out of the operator's seat 4 or block the operator's view during operation. Thus, the user-friendliness of the working machine 1 can be further improved.

(Item 13) The working machine 1 according to any one of items 1 to 12, further including a device mount frame 20 to support the position detector 40, wherein the roof 17 includes an outer roof 21 to define an upper surface of the roof 17, and an inner roof 22 to define a lower surface of the roof 17, and the device mount frame 20 is attached to the inner roof 22.

The inner roof 22 has a higher structural versatility than the upper frame 18. Accordingly, in the working machine 1 of item 13, the position detector 40 can be more suitably located. As a result, the accuracy and reliability of the positioning function can be improved.

(Item 14) The working machine 1 according to any one of items 1 to 13, further including a device mount frame 20 to support the position detector 40, wherein the protector 8 includes an upper frame 18, the device mount frame 20 is located at the upper frame 18 such that the device mount frame 20 is lower than an apex E1 of the upper frame 18, and the position detector 40 is attached to the device mount frame 20 such that an upper surface 40U of the position detector 40 is located higher than the apex E1.

With the working machine 1 of item 14, since the height of the roof 17 (overall height of the working machine 1) can be lower than when the device mount frame 20 is located higher than the apex E1 of the upper frame 18, the reliability of the positioning function can be ensured, and the design of the working machine 1 can be improved.

The position detector 40 is positioned such that the upper surface 40U of the position detector 40 is located higher than the apex E1 of the upper frame 18. Accordingly, the space above the operator's seat 4 can be increased. As a result, the position detector 40 is less likely to interfere with the operator getting into or out of the operator's seat 4 or block the operator's view during operation. Accordingly, the reliability of the positioning function can be ensured, and the user-friendliness of the working machine 1 can be maintained.

(Item 15) The working machine 1 according to any one of items 1 to 14, further including a device mount frame 20 to support the position detector 40, wherein the protector 8 includes an upper frame 18, the upper frame 18 includes a center upper frame 18E included in an upper portion of an intermediate portion of the protector 8 in a front-rear direction, and the position detector 40 is attached to the device mount frame 20 such that a lower surface 40L of the position detector 40 is located lower than an apex E1 of the center upper frame 18E.

With the working machine 1 of item 15, the height of the roof 17 (overall height of the working machine 1) can be lower than when the position detector 40 is located higher than the center upper frame 18E. Accordingly, the reliability of the positioning function can be ensured, and the design of the working machine 1 can be improved. In addition, since the lower surface 40L of the position detector 40 is located lower than the apex E1 of the center upper frame 18E as described above, the roof 17 may have an upper surface structure with less likelihood of rainwater and dust accumulation.

(Item 16) The working machine 1 according to any one of items 1 to 15, further including a device mount frame 20 to support the position detector 40, wherein the position detector 40 is attached to the device mount frame such that an upper surface 40U of the position detector 40 is located lower than a roof upper surface E3 of the roof 17.

With the working machine 1 of item 16, the height of the roof 17 (overall height of the working machine 1) can be lower than when the position detector 40 is located higher than the roof upper surface E3. Accordingly, the reliability of the positioning function can be ensured, and the design of the working machine 1 can be improved. In addition, since the upper surface 40U of the position detector 40 is located lower than the roof upper surface E3 as described above, the roof 17 may have an upper surface structure with less likelihood of rainwater and dust accumulation.

(Item 17) The working machine 1 according to any one of items 1 to 16, wherein the roof 17 includes an outer roof 21 to define an upper surface of the roof 17, and an inner roof 22 to define a lower surface of the roof 17, and the position detector 40 is housed in a device storage space 23S defined between the outer roof 21 and the inner roof 22.

With the working machine 1 of item 17, since the device storage space 23S capable of housing the position detector 40 is provided between the outer roof 21 and the inner roof 22, the position detector 40 does not or is less likely to come into contact with other devices or structural bodies in the vicinity of the position detector 40 due to, for example, vibration of the machine body 2 while the working machine 1 is moving. Accordingly, the positioning function can be more reliably maintained.

(Item 18) The working machine according to item 17, wherein the inner roof 22 includes a bulge 24 protruding downward and defining the device storage space 23S at a lower portion of an interior of the roof 17.

With the working machine 1 of item 18, the possibility of contact between the position detector 40 and obstacles can be more reliably eliminated or reduced, so that the position detector 40 is further less likely to malfunction. Accordingly, the positioning function can be more reliably maintained.

(Item 19) The working machine 1 according to item 17 or 18, wherein the inner roof 22 includes an access hole 26 to allow access to the device storage space 23S from a space where the operator's seat 4 is present, and an access hole cover 27 to cover the access hole 26, and the position detector 40 is positioned in face of the access hole 26.

With the working machine 1 of item 19, when the position detector 40 is subjected to maintenance, the worker can access the device storage space 23S in the interior of the roof 17 through the access hole 26 from below the lower surface of the roof 17 (space where the operator's seat 4 is present) by removing the access hole cover 27 from the inner roof 22. Thus, even when the position detector 40 malfunctions, the position detector 40 can be easily repaired or replaced. Accordingly, the positioning function can be more reliably maintained.

(Item 20) The working machine according to item 19, wherein the inner roof 22 includes a bulge 24 protruding downward and defining the device storage space 23S at a lower portion of an interior of the roof 17, and the bulge 24 includes the access hole 26.

With the working machine 1 of item 20, the possibility of contact between the position detector 40 and obstacles can be more reliably eliminated or reduced, so that the position detector 40 is further less likely to malfunction. Accordingly, the positioning function can be more reliably maintained.

(Item 21) The working machine 1 according to item 19 or 20, wherein the roof 17 includes a device mount frame 20 to support the position detector 40 in the device storage space 23S, and the position detector 40 is attachable to and detachable from the device mount frame 20 through the access hole 26.

With the working machine 1 of item 21, when the position detector 40 is subjected to maintenance, the worker can take out the position detector 40 from the interior of the roof 17 through the access hole 26 by removing the access hole cover 27 from the inner roof 22 and then removing the position detector 40 from the device mount frame 20. Thus, even when the position detector 40 malfunctions, the position detector 40 can be easily repaired or replaced. Accordingly, the positioning function can be more reliably maintained.

(Item 22) The working machine 1 according to item 21, wherein the device mount frame 20 includes a first frame portion 20A fixed to an inside of the roof 17, and a second frame portion 20B removably connected to the first frame portion 20A, and the position detector 40 is provided on the second frame portion 20B.

With the working machine 1 of item 22, when the position detector 40 is subjected to maintenance, the worker can take out the position detector 40 from the interior of the roof 17 through the access hole 26 by removing the access hole cover 27 from the inner roof 22 and then removing the second frame portion 20B from the first frame portion 20A. Thus, even when the position detector 40 malfunctions, the position detector 40 can be easily repaired or replaced. Accordingly, the positioning function can be more reliably maintained.

(Item 23) The working machine 1 according to any one of items 1 to 22, further including a controller 70 to control travel of the machine body 2 based on the position information, a console 9 provided at one side of the operator's seat 4 to house the controller 70 therein, and a communication cable L2 to connect the position detector 40 to the controller 70, wherein the protector 8 includes a pillar 15 provided upright in the vicinity of the operator's seat 4 to support the roof 17, the pillar 15 is in a hollow tubular shape, and the communication cable L2 is guided from the roof 17 through a hollow of the pillar 15 to the console 9.

With the working machine 1 of item 23, since the communication cable L2 that connects the position detector 40 and the controller 70 to each other is guided from the roof 17 through the hollow of the pillar 15 to the console 9, the communication cable L2 does not or is less likely to come into contact with obstacles, be exposed to sunlight for a long time, or be exposed to ultraviolet light. Accordingly, the positioning function can be more reliably maintained. Since the communication cable L2 is guided through the hollow of the pillar 15 as described above, the design of the working machine 1 can be improved.

(Item 24) The working machine 1 according to any one of items 17 to 23, wherein the outer roof 21 includes a raised portion 21A protruding upward and defining the device storage space 23S at an upper portion of an interior of the roof 17.

With the working machine 1 of item 24, the possibility of direct contact between the position detector 40 and obstacles can be eliminated or reduced, so that the position detector 40 is further less likely to malfunction. Accordingly, the positioning function can be more reliably maintained. Additionally, since the position detector 40 is located in an upper portion of the interior of the roof 17, a large space can be provided below the roof 17. Accordingly, the position detector 40 is less likely to interfere with the operator getting into or out of the operator's seat 4 or operating in the operator's seat 4. Thus, the reliability of the positioning function can be ensured, and the user-friendliness of the working machine 1 can be maintained.

(Item 25) The working machine 1 according to any one of items 1 to 24, wherein the position detector 40 is stored in a front portion of an interior of the roof 17.

With the working machine 1 of item 25, the machine body position can be measured assuming that a position close to the center of the machine body 2 in the front-rear direction is the reference center point. Accordingly, the accuracy and reliability of the positioning function can be improved.

(Item 26) The working machine 1 according to item 25, wherein the position detector 40 is located forward of a seat portion 11 of the operator's seat 4.

With the working machine 1 of item 26, the position detector 40 is less likely to interfere with the operator getting into or out of the operator's seat 4 or operating in the operator's seat 4. Thus, the reliability of the positioning function can be ensured, and the user-friendliness of the working machine 1 can be maintained.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine comprising:
- a machine body (2);
- a traveling device (3) to support the machine body (2) such that the machine body (2) is allowed to travel;
- an operator's seat (4);
- a protector (8) provided on the machine body (2) to protect the operator's seat (4); and
- a position detector (40) to acquire position information from one or more positioning satellites; wherein
- the protector (8) includes a roof (17) provided above the operator's seat (4); and
- the position detector (40) is housed in the roof (17).

2. The working machine according to claim 1, wherein the position detector (40) is housed in a rear portion of an interior of the roof (17), wherein preferably
- the traveling device (3) includes:
- a front traveling device (3F) provided at a front portion of the machine body (2); and
- a rear traveling device (3R) provided at a rear portion of the machine body (2); and
- the position detector (40) is located on a rear shaft axis (C1) when viewed in an up-down direction of the machine body (2), the rear shaft axis (C1) extending in a left-right direction along an axis of a drive shaft of the rear traveling device (3R).

3. The working machine according to claim 1 or 2, wherein
- the position detector (40) includes a plurality of the position detectors (40) including:
- a first position detector (40A) housed in a rear portion of an interior of the roof (17); and
- a second position detector (40B) located forward of the first position detector (40A) at a distance from the first position detector (40A).

4. The working machine according to claim 3, wherein
- the protector (8) includes an upper frame (18);
- the upper frame (18) includes:
- a front upper frame (18A) included in an upper front portion of the protector (8);
- a rear upper frame (18B) included in an upper rear portion of the protector (8); and
- left and right side upper frames (18C, 18D) included in an upper left portion and an upper right portion of the protector (8);
- each of the side upper frames (18C, 18D) is rounded to be convex upward;
- the first position detector (40A) is located between the front upper frame (18A) and the rear upper frame (18B) such that the first position detector (40A) is located rearward of curve apices (E2) of the side upper frames (18C, 18D); and
- the second position detector (40B) is located between the front upper frame (18A) and the rear upper frame (18B) such that the second position detector (40B) is located forward of the curve apices (E2).

5. The working machine according to any one of claims 1 to 4, further comprising a device mount frame (20) to support the position detector (40); wherein
- the protector (8) includes an upper frame (18); and
- the device mount frame (20) is attached to the upper frame (18).

6. The working machine according to claim 5, wherein
- the upper frame (18) includes a rear upper frame (18B) included in an upper rear portion of the protector (8);
- the device mount frame (20) extends forward from the rear upper frame (18B); and
- the position detector (40) is attached to a front end portion of the device mount frame (20);
or wherein
- the upper frame (18) includes a front upper frame (18A) included in an upper front portion of the protector (8);
- the device mount frame (20) extends rearward from the front upper frame (18A); and
- the position detector (40) is attached to a rear end portion of the device mount frame (20).

7. The working machine according to claim 5 or 6, wherein
- the upper frame (18) includes left and right side upper frames (18C, 18D) included in an upper left portion and an upper right portion of the protector (8);
- each of the side upper frames (18C, 18D) is rounded to be convex upward; and
- the position detector (40) is attached to the device mount frame (20) such that a lower surface of the position detector (40) is located lower than curve apices (E2) of the side upper frames (18C, 18D).

8. The working machine according to any one of claims 1 to 4, further comprising a device mount frame (20) to support the position detector (40); wherein
- the protector (8) includes an upper frame (18);
- the upper frame (18) includes left and right side upper frames (18C, 18D) included in an upper left portion and an upper right portion of the protector (8);
- each of the side upper frames (18C, 18D) is rounded to be convex upward; and
- the device mount frame (20) is attached to at least one of the side upper frames (18C, 18D).

9. The working machine according to any one of claims 1 to 8, further comprising a device mount frame (20) to support the position detector (40);
wherein
- the protector (8) includes an upper frame (18);
- the device mount frame (20) is located at the upper frame (18) such that the device mount frame (20) is lower than an apex (E1) of the upper frame (18); and
- the position detector (40) is attached to the device mount frame (20) such that an upper surface (40U) of the position detector (40) is located higher than the apex (E1),
and/or wherein
- the protector (8) includes an upper frame (18);
- the upper frame (18) includes a center upper frame (18E) included in an upper portion of an intermediate portion of the protector (8) in a front-rear direction; and
- the position detector (40) is attached to the device mount frame (20) such that a lower surface (40L) of the position detector (40) is located lower than an apex (E1) of the center upper frame (18E).

10. The working machine according to any one of claims 1 to 9, wherein
- the roof (17) includes:
- an outer roof (21) to define an upper surface of the roof (17); and
- an inner roof (22) to define a lower surface of the roof (17); and
- the position detector (40) is housed in a device storage space (23S) defined between the outer roof (21) and the inner roof (22).

11. The working machine according to claim 10, wherein the inner roof (22) includes a bulge (24) protruding downward and defining the device storage space (23S) at a lower portion of an interior of the roof (17).

12. The working machine according to claim 10 or 11, wherein
- the inner roof (22) includes:
- an access hole (26) to allow access to the device storage space (23S) from a space where the operator's seat (4) is present; and
- an access hole cover (27) to cover the access hole (26); and
- the position detector (40) is positioned in face of the access hole (26).

13. The working machine according to claim 12, wherein
- the inner roof (22) includes a bulge (24) protruding downward and defining the device storage space (23S) at a lower portion of an interior of the roof (17); and
- the bulge (24) includes the access hole (26).

14. The working machine according to claim 12 or 13, wherein
- the roof (17) includes a device mount frame (20) to support the position detector (40) in the device storage space (23S); and
- the position detector (40) is attachable to and detachable from the device mount frame (20) through the access hole (26),
wherein preferably
- the device mount frame (20) includes:
- a first frame portion (20A) fixed to an inside of the roof (17); and
- a second frame portion (20B) removably connected to the first frame portion (20A); and
- the position detector (40) is provided on the second frame portion (20B).

15. The working machine according to any one of claims 1 to 14, further comprising:
- a controller (70) to control travel of the machine body (2) based on the position information;
- a console (9) provided at one side of the operator's seat (4) to house the controller (70) therein; and
- a communication cable (L2) to connect the position detector (40) to the controller (70); wherein
- the protector (8) includes a pillar (15) provided upright in the vicinity of the operator's seat (4) to support the roof (17);
- the pillar (15) is in a hollow tubular shape; and
- the communication cable (L2) is guided from the roof (17) through a hollow of the pillar (15) to the console (9).
